# EUROPEAN PATENT APPLICATION

(11) **EP 4 539 575 A1**
(43) Date of publication of application: **16.04.2025**
(21) Application number: 23819759.4
(22) Date of filing: 01.06.2023
(51) Int. Cl.: H04W 72/1263, H04W 24/10, H04W 28/06, H04W 76/10

(54) **SERVER APPARATUS, APPLICATION EXECUTION METHOD, CORE NETWORK APPARATUS, AND COMMUNICATION PROCESSING METHOD FOR CORE NETWORK**

(30) Priority: 09.06.2022 JP 2022093930
(71) Applicant: Sony Group Corporation, Tokyo 108-0075 (JP)
(72) Inventor: TSUDA Shinichiro, Tokyo 108-0075 (JP)
(74) Representative: Witte, Weller & Partner Patentanwälte mbB
(86) International application number: PCT/JP2023/020544
(87) International publication number: WO 2023/238779

(57) **Abstract**

Provided is a server device that can set individually different QoS for each data flow in a case where a plurality of types of data is exchanged, and can improve QoS by modifying a format of data in a case where QoS of a certain data flow does not satisfy a desired condition.

A processor of an application server 50 executes: a process of mapping two or more pieces of data individually to two or more QoS flows to be allocated to one PDU session (S903); a process of receiving a QoS monitoring result of the two or more QoS flows (S904); and a process of modifying a format of at least one piece of data among the two or more pieces of data in a case where the received QoS monitoring result does not satisfy a desired condition (S905).

## Description

### TECHNICAL FIELD

The present disclosure relates to a server device, an application execution method, a core network device, and a core network communication processing method.

### BACKGROUND ART

Transmission of moving image data of 4K or 8K has been expected due to features of ultra-high speed, low delay, high reliability, and multiple simultaneous connection of 5G. Moreover, wearable devices are also expected to spread as post-smartphones.

For example, in a use case where VR content is displayed on a head mounted display (HMD) through wireless communication, transmission of high-resolution and large-volume moving image data is performed, and transmission of data having a relatively small size from a sensor equipped in the HMD is also performed. That is, in such a use case, a plurality of types of data having different sizes and delay requests is exchanged.

In a normal 5G system, one PDU session is established for every application. At this time, in a case where a plurality of types of data is exchanged, it is desirable that different quality of service (QoS) can be set for individual data flows. Furthermore, in a case where the QoS of a certain data flow does not satisfy a desired condition, it is desirable that the QoS can be improved by modifying a format of data.

Patent Document 1 describes a technology for controlling a communication path between a wireless terminal device and an application function (AF) that processes a control plane of an application server. In this technology, the AF sends an AF request message including information as to whether or not to allow modification of a user plane function (UPF), to a session management function (SMF). The SMF determines whether or not it is necessary to modify the UPF included in the communication path between the wireless terminal device and the AF, and controls the communication path on the basis of a result of the determination. However, Patent Document 1 does not describe a matter of handling a plurality of data flows.

### CITATION LIST

### NON-PATENT DOCUMENT

PATENT DOCUMENT 1 Japanese Unexamined Patent Application Publication No. 2022-504243

### SUMMARY OF THE INVENTION

### PROBLEMS TO BE SOLVED BY THE INVENTION

The present disclosure has been made to solve the problem described above, and an object of the present disclosure is to provide a server device, an application execution method, a core network device, and a core network communication processing method capable of setting individually different QoS for each data flow in a case where a plurality of types of data is exchanged, and improving QoS by modifying a format of data in a case where QoS of a certain data flow does not satisfy a desired condition.

### SOLUTIONS TO PROBLEMS

A server device according to the present disclosure is a server device including a processing execution unit, in which the processing execution unit executes: a process of determining two or more pieces of data to be allocated to one PDU session; a process of determining a number of two or more QoS flows to be allocated to the one PDU session, a characteristic of each QoS flow, and monitoring setting of each QoS flow; a process of generating a request including the number of QoS flows, the characteristic of each QoS flow, and the QoS monitoring setting of each QoS flow; a process of sending the request; a process of mapping the two or more pieces of data individually to the two or more QoS flows to be allocated to the one PDU session; a process of acquiring a QoS monitoring result of the two or more QoS flows; and a process of modifying a format of at least one piece of data among the two or more pieces of data in a case where the acquired QoS monitoring result does not satisfy a desired condition.

An application execution method according to the present disclosure includes: a step of determining two or more pieces of data to be allocated to one PDU session; a step of determining a number of two or more QoS flows to be allocated to the one PDU session, a characteristic of each QoS flow, and QoS monitoring setting of each QoS flow; a step of generating a request including the number of QoS flows, the characteristic of each QoS flow, and the QoS monitoring setting of each QoS flow; a step of sending the request; a step of mapping the two or more pieces of data individually to the two or more QoS flows to be allocated to the one PDU session; a step of acquiring a QoS monitoring result of the two or more QoS flows; and a step of modifying a format of at least one piece of data among the two or more pieces of data in a case where the acquired QoS monitoring result does not satisfy a desired condition.

A core network device according to the present disclosure is a core network device including a processing execution unit, in which the processing execution unit executes: a process of receiving a request including a number of two or more QoS flows to be allocated to one PDU session, a characteristic of each QoS flow, and QoS monitoring setting of each QoS flow; a process of establishing the one PDU session in response to a connection request from a wireless terminal device; and a process of allocating two or more QoS flows to the one PDU session on the basis of the request, and setting the characteristic and the QoS monitoring to each QoS flow.

A core network communication processing method according to the present disclosure includes: a step of receiving a request including a number of two or more QoS flows to be allocated to one PDU session, a characteristic of each QoS flow, and QoS monitoring setting of each QoS flow; a step of establishing the one PDU session in response to a connection request from a wireless terminal device; and a step of allocating two or more QoS flows to the one PDU session on the basis of the request, and setting the characteristic and the QoS monitoring to each QoS flow.

### BRIEF DESCRIPTION OF DRAWINGS

Fig. 1A is a diagram illustrating an example of image division processing depending on a user's viewpoint.
Fig. 1B is a diagram illustrating an example of the image division processing depending on a user's viewpoint.
Fig. 2 is a diagram illustrating a configuration of a network architecture of a 5GS.
Fig. 3 is a diagram illustrating an example of a QoS architecture of the 5GS.
Fig. 4 is a diagram illustrating an example of a connectivity model for edge computing in a 5GC.
Fig. 5 is a flowchart for explaining a first example of AF request generating/sending processing executed in an AF according to the present disclosure.
Fig. 6 is a flowchart for explaining a second example of the AF request generating/sending processing executed in the AF according to the present disclosure.
Fig. 7 is a flowchart for explaining a third example of the AF request generating/sending processing executed in the AF according to the present disclosure.
Fig. 8A is a sequence diagram for explaining an example of PDU session establishment processing according to the present disclosure.
Fig. 8B is a sequence diagram for explaining an example of the PDU session establishment processing according to the present disclosure.
Fig. 9 is a flowchart illustrating a first example of processing according to QoS monitoring and executed by an application server, according to the present disclosure.
Fig. 10 is a flowchart illustrating a second example of the processing according to QoS monitoring and executed by the application server, according to the present disclosure.
Fig. 11 is a flowchart illustrating a third example of the processing according to QoS monitoring and executed by the application server according to the present disclosure.
Fig. 12 is a flowchart illustrating an example of control of an operation mode of a wireless terminal device according to the present disclosure.

### MODE FOR CARRYING OUT THE INVENTION

Hereinafter, an embodiment of the present disclosure will be described in detail with reference to the drawings. In the drawings, the same or corresponding elements are denoted by the same reference numerals, and detailed description thereof is omitted as appropriate.

The configuration of the present disclosure is as follows.

Among them, Chapters 2 to 6 are descriptions of the related art already standardized by 3GPP, and Chapters 1 and 7 and subsequent chapters are descriptions of the technology according to the present disclosure.
1. 5G Use Case
2. 5GS Network Architecture
3. 5GS QoS Control
4. Utilization of Edge Computing Technology
5. Service Function Chaining
6. Request for Routing of Traffic through AF
7. AF Request Generating/Sending Processing According to Present Disclosure
7-1. First Example
7-2. Second Example
7-3. Third Example
8. PDU Session Establishment Processing According to Present Disclosure
9. Processing Executed by Application Server According to Present Disclosure
9-1. First Example
9-2. Second Example
9-3. Third Example
10. Control of Operation Mode of Wireless Terminal Device According to Present Disclosure
11. Conclusion

### <1. 5G Use Case>

In a 5G use case, transmission of high-quality moving image data such as 4K and 8K is expected. In particular, transmission of extended reality (XR) media including virtual reality (VR) is required to have real-time performance, and is also required to have a feature of not only a high speed and a large volume but also a low delay. However, wireless resources are finite. Therefore, it is required to efficiently exchange a large volume of data in limited wireless resources.

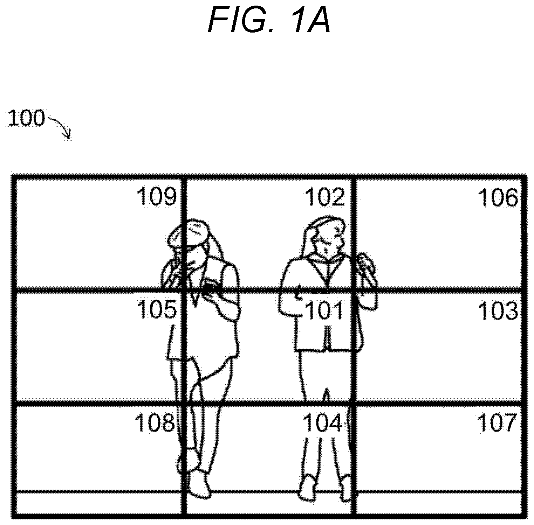

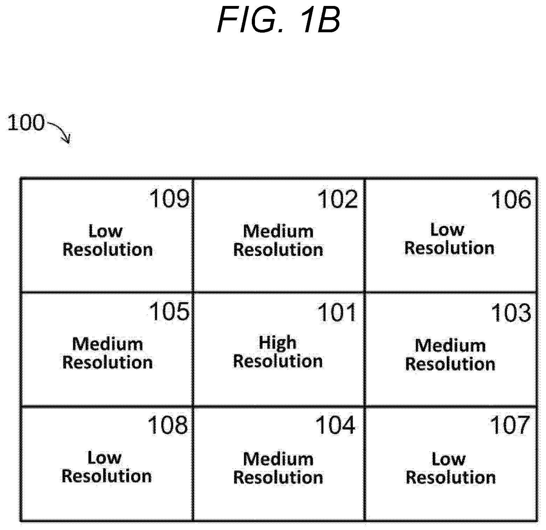

Fig. 1 is a diagram illustrating an example of image division processing depending on a user's viewpoint (Viewport). According to the user's viewpoint, a data size of an image 100 can be reduced by dividing the image 100 into regions 101 to 109 (Fig. 1A) and reducing resolution of a region away from a center of the viewpoint (Fig. 1B). Here, an example of equally dividing into the nine regions 101 to 109 has been described, but the number of regions to be divided may be freely determined, and shapes and areas of the individual regions may not be the same.

Furthermore, in a case of using image processing of synthesizing a plurality of frame images to generate one high-resolution frame image, resolution can be reduced by lowering a frame rate. For example, the resolution can be reduced by lowering a frame rate of a moving image in the regions 102 to 105 to be lower than a frame rate of a moving image in the region 101. Furthermore, the resolution can be further reduced by further lowering a frame rate of a moving image in the regions 106 to 109 to be lower than the frame rate of the moving image in the regions 102 to 105.

Note that the plurality of frame images may be configured in a group of picture (GOP) format. For example, the resolution can be reduced by not sending a P frame and/or a B frame among an I frame (intra-picture), the P frame (predictive-picture), and the B frame (Bidirectionally predictive-picture). Furthermore, although an example of an image displayed two-dimensionally is illustrated here, an image displayed three-dimensionally, for example, a full spherical movie may be used.

### <2. 5GS Network Architecture>

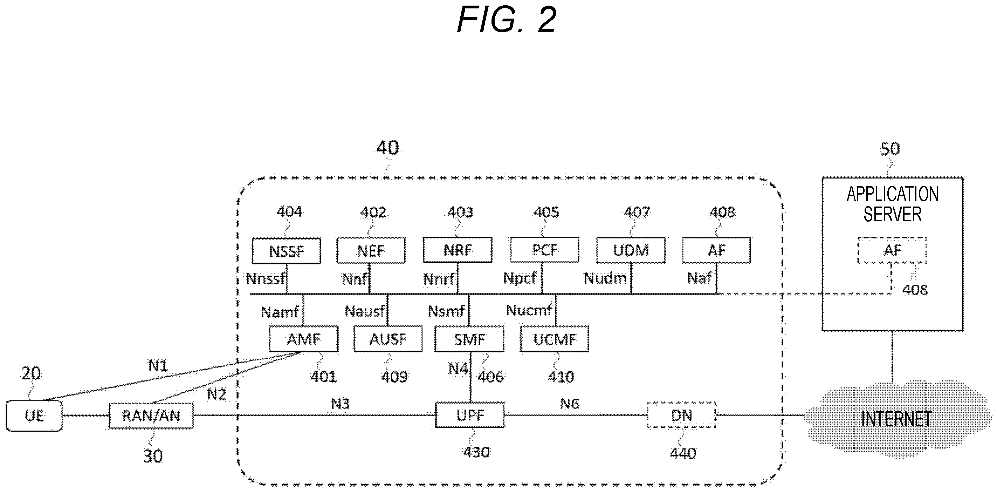

Fig. 2 is a diagram illustrating a configuration of a 5G system (5GS) network architecture. The 5GS includes user equipment (UE) 20, a radio access network/access network (RAN/AN) 30, and a 5G core (5GC) 40. The 5GC is also referred to as NG CORE (NGC) or a core network.

By connecting an application server (AS) 50 that executes an application to the 5GS through the Internet, the UE 10 can use the application through 5G service.

In a case where an entity that provides the application, for example, a service provider, has a subscription such as a service level agreement (SLA) with a public land mobile network (PLMN) operator that provides the 5G service, the application server 50 can be arranged in the 5GC 40 as a DN 440. The application server 50 may be provided in a form of an edge server.

For example, a function group of a control plane of the 5GS includes a plurality of network functions (NFs) including an access and mobility management function (AMF) 401, a network exposure function (NEF) 402, a network repository function (NRF) 403, a network slice selection function (NSSF) 404, a policy control function (PCF) 405, a session management function (SMF) 406, a unified data management (UDM) 407, an application function (AF) 408, an authentication server function (AUSF) 409, and a UE radio capability management function (UCMF) 410.

The AF 408 has a function of processing a control plane of the application server 50. The AF 408 may be arranged inside the application server 50. The UDM 407 includes a unified data repository (UDR) that stores subscriber information, and a front end (FE) unit that processes the subscriber information. The AMF 401 performs mobility management. The SMF 406 performs session management.

The UCMF 410 holds UE radio capability information corresponding to all UE radio capability IDs in a Public Land Mobile Network (PLMN). The UCMF 410 is responsible for assigning each PLMN-assigned UE radio capability ID.

Namf is a service-based interface provided by the AMF 401. Nsmf is a service-based interface provided by the SMF 406. Nnef is a service-based interface provided by the NEF 402. Npcf is a service-based interface provided by the PCF 405. Nudm is a service-based interface provided by the UDM 407. Naf is a service-based interface provided by the AF 408. Nnrf is a service-based interface provided by the NRF 403. Nnssf is a service-based interface provided by the NSSF 404. Nausf is a service-based interface provided by the AUSF 409. Nucmf is a service-based interface provided by the UCMF 410. Each NF exchanges information with other NFs through the respective service-based interface.

A user plane function (UPF) 430 has a function of processing a user plane. The data network (DN) 440 has a function of enabling connection to service unique to a mobile network operator (MNO), the Internet, or a third-party service. The UPF 430 also functions as a transfer processing unit of user plane data processed by the application server 50. The UPF 430 also functions as a gateway connected to the RAN/AN 30.

The RAN/AN 30 has a function of enabling connection to a radio access network (RAN) and connection to an access network (AN) other than the RAN. The RAN/AN 30 includes a base station called gNB or ng-eNB. The RAN may be referred to as a next generation (NG)-RAN.

Information is exchanged between the UE 20 and the AMF 401 via a reference point N1. Information is exchanged between the RAN/AN 30 and the AMF 401 via a reference point N2. Information is exchanged between the SMF 406 and the UPF 430 via a reference point N4.

The SMF 406 performs QoS control for each service data flow. The QoS control of the SMF 406 may be applied to both IP and Ethernet type service data flows. The SMF 406 provides QoS authorized for each specific service by performing the QoS control for each service data flow.

The SMF 406 may use an index such as QoS subscriber information in conjunction with a service-based, subscription-based, or a predefined PCF internal policy rule that has been defined inside the PCF in advance.

The SMF 406 uses a policy and charging control (PCC) rule related to a QoS flow, that is, a QoS-controlled data flow, to determine QoS to be authorized for the QoS flow.

In a case where the QoS flow is deleted, the SMF 406 may notify the PCF 405 of the deletion of the QoS flow. Furthermore, in a case where a bit rate guaranteed in the QoS flow, that is, a guaranteed flow bit rate (GFBR) cannot be guaranteed, the SMF 406 can notify the PCF 405 of the fact that the GFBR cannot be guaranteed.

As a QoS reservation procedure of the QoS flow, a UE-initiated QoS flow can be established. Furthermore, QoS downgrade or upgrade is also possible as part of QoS flow modification processing.

### <3. 5GS QoS control>

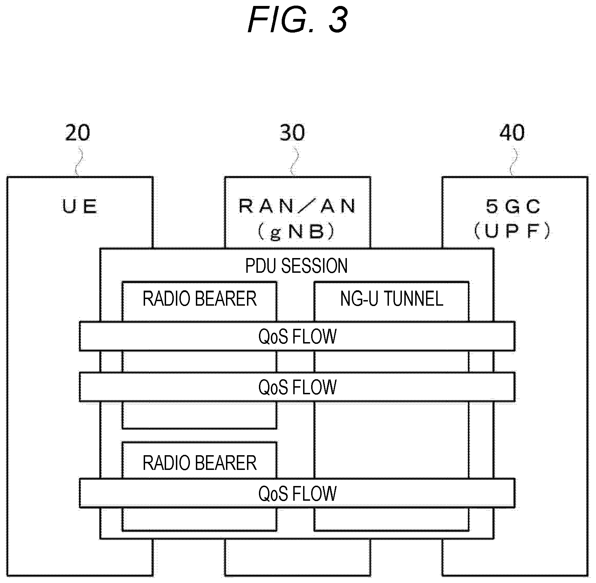

Fig. 3 is a diagram illustrating an example of a QoS architecture of the 5GS (excerpted from 3GPP TS 38.300). At a non-access stratum (NAS) level, a QoS flow is the finest granularity in distinguishing different QoS in a protocol data unit (PDU) session. Within the PDU session, QoS flows are identified by a QFI (QoS Flow ID).

Furthermore, in XR or media service, a group of packets transmits a payload of a PDU set. The PDU set includes one or more PDUs that transmit payloads in units of information generated at an application level, for example, image frames, video slices of the XR and the media service, and I frames, P frames, B frames, and the like of moving image data in a GOP format. That is, a packet in the PDU set is treated as a unit of data that should be received and decoded within a certain period of time. Among QoS flows with the finest granularity in terms of QoS control, data can be identified with finer granularity by the PDU set. The 5GS may apply QoS control of the PDU set level in addition to QoS control of the QoS flow level.

The base station (gNB) of the RAN/AN 30 can establish at least one data radio bearer (DRB) together with the PDU session, between with each UE 20. The DRB is a logical path for transmitting data. In the QoS model of 5G, a guaranteed flow bit rate (GBR) in which a band is guaranteed and a non-guaranteed flow bit rate (Non-GBR) in which a band is not guaranteed are supported.

By mapping each packet to an appropriate QoS flow and DRB, the RAN/AN 30 and the 5GC 40 ensure quality of service. That is, two-stage mapping is performed, including mapping between an IP flow and a QoS flow in non-access stratum (NAS) and mapping between a QoS flow and a DRB in access stratum (AS).

At the NAS level, the QoS flow is characterized by a QoS profile provided from the 5GC 40 to the RAN/AN 30 and a QoS rule provided from the 5GC 40 to the UE 20.

The QoS profile is used by the RAN/AN 30 to determine a processing method on a wireless interface. The QoS rule is used to instruct the UE 20 to perform mapping between the QoS flow and traffic of the user plane in uplink.

The QoS profile is provided from the SMF 406 to the RAN/AN 30 through the AMF 401 and the reference point N2, or is set in the RAN/AN 30 in advance.

Furthermore, the SMF 406 may provide one or more QoS rules and, if necessary, a QoS flow-level QoS parameters associated with the QoS rules, to the UE 20 through the AMF 401 and the reference point N1.

In addition to or instead of this, reflective QoS control can be applied to the UE 20. The reflective QoS control is QoS control that monitors the QFI of downlink packets and applies the same mapping to uplink packets.

The QoS flow becomes a GBR QoS flow or a non-GBR QoS flow depending on the QoS profile. The QoS profile of the QoS flow includes, for example, QoS parameters such as a 5G QoS identifier (5QI) and an allocation and retention priority (ARP).

The ARP includes information regarding a priority level, a pre-emption capability, and a pre-emption vulnerability. The priority level defines relative importance of the QoS flow, and indicates that the smallest value of the priority level is prioritized the most. The pre-emption capability is an index that defines whether or not a certain QoS flow can deprive resources already allocated to other lower priority QoS flows. The pre-emption vulnerability is an index that defines whether or not a certain QoS flow is able to vacate its allocated resources to other higher priority QoS flows. Either "enabled" or "disabled" is set for the pre-emption capability and the pre-emption vulnerability.

In the GBR QoS flow, the QoS profile includes uplink and downlink guaranteed flow bit rate (GFBR), an uplink and downlink maximum flow bit rate (MFBR), an uplink and downlink maximum packet loss rate, a delay critical resource type, notification control, and the like.

In the non-GBR QoS flow, the QoS profile includes a reflective QoS attribute (RQA), additional QoS flow information, and the like.

The notification control of the QoS parameter indicates whether or not a notification from the RAN/AN 30 is requested when a certain QoS flow cannot satisfy the GFBR. In a case where it is determined that, for a certain GBR QoS flow, the notification control is "enabled" and the GFBR cannot be satisfied, the RAN/AN 30 sends a notification to that effect to the SMF 406.

At that time, unless the RAN/AN 30 is in a special state of requesting release of RAN resources of the GBR QoS flow, for example, radio link failure or RAN internal congestion, the RAN/AN 30 must maintain the QoS flow. Then, in a case where it is determined that the GFBR is satisfied again for the QoS flow, the RAN/AN 30 sends a new notification to that effect to the SMF 406.

An aggregate maximum bit rate (AMBR) is related to a Session-AMBR of each PDU session and the UE-AMBR of each UE 10. The Session-AMBR limits an aggregate bit rate expected to be provided across all non-GBR QoS flows for a specific PDU session, and is managed by a user plane function (UPF). The UE-AMBR limits an aggregate bit rate expected to be provided across all non-GBR QoS flows for a certain UE 20, and is managed by the RAN/AN 30.

The 5QI relates to QoS features and provides guidelines (policies) for setting node-specific parameters for each QoS flow. The standardized or preset QoS feature of 5G can be learned from the 5QI, and no explicit signaling is performed. Signaled QoS features can be included as part of the QoS profile.

The QoS features include information regarding a resource type, a priority, a packet delay budget, a packet error rate, an averaging window, a maximum data burst volume, and the like. The resource type is the GBR QoS flow or the non-GBR QoS flow. The packet delay budget may include a packet delay budget in the 5GC 40.

At the AS level, the DRB defines a packet processing method at a wireless interface (Uu interface). The DRB provides the same packet transfer procedure for any packet.

The RAN/AN 30 maps the QoS flow to the DRB on the basis of the QFI and the QoS profile set to the QFI. The RAN/AN 30 can establish different DRBs for packets requesting different packet transfer procedures (see Fig. 3). Furthermore, the RAN/AN 30 may multiplex a plurality of QoS flows belonging to the same PDU session into the same DRB (see Fig. 3).

On uplink, mapping of QoS flows to the DRBs is controlled by mapping rules signaled in two different methods. One method is a method called reflective mapping. In the reflective mapping, the UE 20 monitors the QFI of downlink packets for each DRB and applies the same mapping to uplink packets. Another method is a method called explicit configuration. In the explicit configuration, the mapping rule of the QoS flow to the DRB is explicitly signaled by an RRC.

On downlink, the QFI is signaled on the Uu interface by the RAN/AN 30 for reflective quality of service (RQoS), but neither the RAN/AN 30 nor the NAS signal the QFI for the DRB on the Uu interface unless they use the reflective mapping for the QoS flow carried on that DRB.

On uplink, the RAN/AN 30 may set signaling of the QFI on the Uu interface towards the UE 20. Furthermore, a default DRB can be set for each PDU session. In a case where uplink packets do not adapt to either the explicit configuration or the reflective mapping, the UE 20 maps the packets to the default DRB of the PDU session.

For the non-GBR QoS flows, the 5GC 40 may send additional QoS flow information parameters related to any QoS flow to the RAN/AN 30, to instruct to increase a frequency of certain traffic relative to other non-GBR QoS flows in the same PDU session.

How to map multiple QoS flows in the PDU session to one DRB depends on the RAN/AN 30. For example, the RAN/AN 30 may map the GBR QoS flow and the non-GBR QoS flow to the same DRB or to different DRBs. Furthermore, the RAN/AN 30 may map multiple GBR QoS flows to the same DRB or to different DRBs.

In the 5G NR, a service data adaptation protocol (SDAP) sublayer is newly introduced for QoS control through a QoS flow. By the SDAP sublayer, traffic of a QoS flow is mapped to an appropriate DRB. The SDAP sublayer may have a plurality of SDAP entities, and has an SDAP entity for each PDU session on the Uu interface. Establishment or release of the SDAP entity is performed by the RRC.

The QoS flow is identified by the QFI in a PDU session container included in the GPRS tunneling protocol (GTP)-U header. The PDU session is identified by a GTP-U TEID (Tunnel Endpoint ID). The SDAP sublayer maps each QoS flow to a specific DRB.

Upon receiving the QoS monitoring request from the AF 408, the PCF 405 may generate an authorized QoS monitoring policy and provide the QoS monitoring policy to the SMF 406 by including the QoS monitoring policy in a PCC rule.

The SMF 406 may activate end-to-end UL/DL packet delay measurement between the UE 20 and the PDU session anchor (PSA)-UPF 430 for QoS flows during a PDU session establishment procedure or a PDU session modification procedure.

The SMF 406 sends a QoS monitoring request to the UPF 430 via the reference point N4, and sends N2 signaling to request QoS monitoring between the UPF 430 and the RAN/AN 30.

On the basis of the QoS monitoring policy received from the PCF 405 or an authorized QoS monitoring policy that is locally set in advance, the QoS monitoring request includes a monitoring variable determined by the SMF 406.

The RAN/AN 30 measures a delay of UL/DL packets in the RAN/AN 30 portion, and provides a measurement value to the UPF 430 via a reference point N3.

The UPF 430 calculates a delay of the UL/DL packet at the reference point N3 or N9. The UPF 430 sends a QoS monitoring result to the SMF 406 on the basis of a predetermined condition. Here, the predetermined condition is, for example, only once, periodically, or an event trigger.

Furthermore, the UPF 430 can support sending of a QoS monitoring result to the AF 408 through the locally arranged NEF 402. Here, the QoS monitoring result is, for example, the GFBR of each GBR QoS flow of the target PDU session, a Session-AMBR of the target PDU session, a delay of the UL/DL packets, or the like. The delay of the UL/DL packets is a delay including a delay of UL/DL packets in the RAN/AN 30 portion acquired from the RAN/AN20 and a delay of UL/DL packets at the reference point N3 or N9.

The locally arranged NEF 402 may send the QoS monitoring result to the locally arranged AF 408 with a low delay. The locally arranged AF 408 may register, with the PCF 405, a subscription for sending of a low-delay QoS monitoring result through the non-local NEF 402 or the locally arranged NEF 402.

In a case where the non-local NEF 402 determines that it is not suitable to respond to a request from the locally arranged AF 408, the non-local NEF 402 may redirect the request from the locally arranged AF 408 to the locally arranged NEF 402.

The locally arranged AF 408 may directly register subscription of pcf_PolicyAuthorization_Subscribe service with the PCF 405, and directly receive the QoS monitoring result from the UPF 430.

Furthermore, a locally arranged PDU session anchor (PSA)-UPF may provide Nupf_EventExposure_Notify service. The locally arranged PSA-UPF may send Nupf_EventExposure_Notify for a notification target address designated by a session reporting rule received from the SMF 406.

For example, sending of the QoS monitoring result is registered as the Nupf_EventExposure_Notify service, and the non-local AF 408 or the locally arranged NEF 402 is designated as the notification target address. In a case where the locally arranged NEF 402 is designated as the notification target address, the locally arranged NEF 402 sends the QoS monitoring result to the non-local AF 408.

### <4. Utilization of Edge Computing Technology>

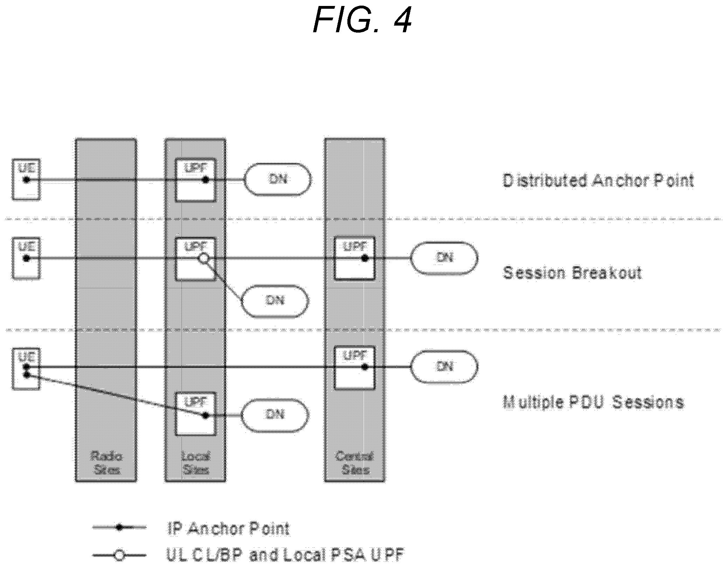

Fig. 4 is a diagram illustrating an example of a connectivity model for edge computing in the 5GC (excerpted from 3GPP TS 23.548).

In the 5GC 40, at least three types of distributed anchor point, which are session breakout, and multiple PDU sessions are defined, as a connectivity model for connection with an edge server that implements edge computing.

In the distributed anchor point illustrated in an upper part of Fig 4, for one PDU session, a PDU session anchor (PSA)-UPF is installed in a local site near the UE.

In the session breakout illustrated in a middle part of Fig. 4, for one PDU session, PSA-UPF (C-PSA UPF) is installed at a central site, and one or more PSA-UPFs (L-PSA UPFs) are installed at the local site.

In the multiple PDU sessions illustrated in a lower part of Fig. 4, an edge computing application uses a PDU session connected with a PSA-UPF installed at the local site, and other applications use a PDU session connected with a PSA-UPF installed at a central site.

Some or all functions of the application processed by the application server 50 are implemented in a DN installed in the local site. For example, in the distributed anchor point, the session breakout, or the multiple PDU sessions, some or all functions of the application that processes data exchanged through a low-delay QoS flow are implemented in the DN that is installed at the local site and operates as an edge server.

Similarly, the AF 408 responsible for control plane processing of the application server 50 is set in a distributed manner in accordance with functions of the application implemented in a distributed manner in the DN installed at the central site or the DN installed at the local site.

### <5. Service Function Chaining>

A network operator may define a policy for service function chaining to transfer traffic related to any application, and modify the policy to improve a user's quality of experience (QoE).

The service functions for the 5G network are, for example, functions of a firewall, network address translation (NAT), an antivirus, parental control, distributed denial of service (DDoS) protection, TCP proxy, a load balancer, KPI monitoring, edge hosting environment (EHE), and the like.

The service function chaining is a chain of service functions constructed to enable processing by a network function to be executed on transferred packets in an appropriate order. The network function may provide one or more service functions.

The network operator may generate, modify, or delete one service function on the basis of the service function chaining policy. Furthermore, the network operator can generate, set, or control the chain of service functions including a plurality of service functions for every application and/or every user, on the basis of a policy of the network operator or a request from a third party.

### <6. Request for Routing of Traffic through Application Function (AF)>

Regarding routing of traffic from the application server 50 or to the application server 50, the AF 408 can make a request to the 5GS by using an application function request (AF request).

For example, the 5GS may consider the AF request in selecting/reselecting the UPF 430 or the SMF 406. The AF request is sent to the PCF 405 through the NEF 402. However, in a case where the AF 408 has direct access to the PCF 405, the AF request is sent to the PCF 405 via a reference point N5 defined between the AF 408 and the PCF 405. The PCF 405 translates the received AF request into a policy/rule to be applied to the PDU session.

The AF request must include a traffic description, a target UE identifier(s), and an AF transaction identifier, which are mandatory.

The traffic description is information for identifying traffic, and includes a set of a data network name (DNN) and single network slice selection assist information (S-NSSAI), and an application identifier or traffic filtering information.

The DNN corresponds to an access point name (APN) used in a 4G or earlier system. The S-NSSAI is information (network slice selection assistance information) for assisting selection of a network slice, and is configured by a set of a mandatory 8-bit slice/service type (SST) for identifying a slice type and an optional 24-bit slice differentiator (SD) for distinguishing different slices in the same SST.

The application identifier is information for identifying an application that handles traffic of the user plane, and is used by the UPF 430 to identify traffic of the application. The traffic filtering information is information for classifying traffic, and is, for example, 5tuple including a source IP, a source port number, a destination IP, a destination port number, and a protocol number.

Furthermore, the AF request can include information about a position of a potential application, depending on conditions. Here, the information about the position of the potential application is provided as a list including a data network access identifier (DNAI) for identifying user plane access to one or more DNs 440 that are candidates for implementation of the application.

Moreover, the AF request may optionally include a spatial validation condition, N6 traffic routing requirements, application relocation possibility, UE IP address preservation indication, a temporary validity condition, information regarding AF subscription for an SMF event, information for IP replacement of an edge application server (EAS) in the 5GC 40, a user plane latency requirement, information regarding an AF change, an instruction for edge application server relocation (EAS relocation), and the like.

The spatial validity condition is provided in a form of a valid area. In a case where the AF request is a request related to determination of routing of traffic in the SMF 406, the spatial validity condition indicates that the routing is applied only to traffic of the UE 20 located at a specific position. In a case where the AF request is a request for registering a notification of an event of path management of the user plane, the spatial validity condition indicates that the notification is applied only to traffic of the UE 20 located at a specific position.

The information regarding the N6 traffic routing requirements is information provided for each DNAI, and may include a routing profile ID and N6 traffic routing information. Here, the N6 is a reference point between the UPF 430 and the DN 440. The routing profile ID is identification information for referring to a policy related to routing agreed in advance between the AF 408 and the 5GC 40. The N6 traffic routing information includes information necessary for transferring traffic to the DNAI.

The application relocation possibility is information indicating whether or not the application can be relocated after the position of the application is selected by the 5GC 40.

The UE IP address preservation indication indicates that an IP address of the UE 20 related to traffic identified by the traffic description should be maintained. Upon receiving this instruction from the AF 408, the 5GC 40 maintains the IP address of the UE 20 by avoiding reselection of the UPF 430 after the UPF 430 is selected.

The temporary validity condition is provided in a form indicating a time interval or a time period in which the AF request is applied. In a case where the AF request is a request related to determination of routing of traffic in the SMF 406, the temporary validity condition indicates when the routing is applied. In a case where the AF request is a request for registering a notification of an event of path management of the user plane, the temporary validity condition indicates when the notification occurs.

The AF request including the information regarding AF subscription for the SMF event is a request for registering a notification of a change in a path of the user plane related to traffic identified by the traffic description, and includes a type of subscription, a notification target address for receiving an event notification, and the like. In a case where the type of subscription is early notification, the SMF 406 sends a notification of a path change before a new user plane path is set. In a case where the subscription type is late notification, the SMF 406 sends a notification of a path change after a new user plane path is set.

The information for IP replacement of the edge application server instructs an identifier of a source edge application server and an identifier of a target edge application server for service by edge computing. The identifier herein is, for example, IP addresses and port numbers of the source and target edge application servers.

The user plane latency requirement is a delay in the user plane which is considered when the target edge application server is relocated. In network deployment in which an estimated value of a delay in the user plane between the UE 20 and the candidate PSA-UPF is known to the SMF 406, the AF 408 may request, through the AF request, the user plane latency requirement to the 5GC 40, so that the SMF 406 may determine relocation of the PSA-UPF on the basis of the AF request.

The information regarding an AF change is information regarding relocation of the AF 408, and includes an AF ID which is information for identifying the target AF 408 of the modify destination. The instruction for relocation of the edge application server is an instruction for relocation of the application.

### <7. AF Request Generating/Sending Processing According to Present Disclosure>

### (7-1. First Example)

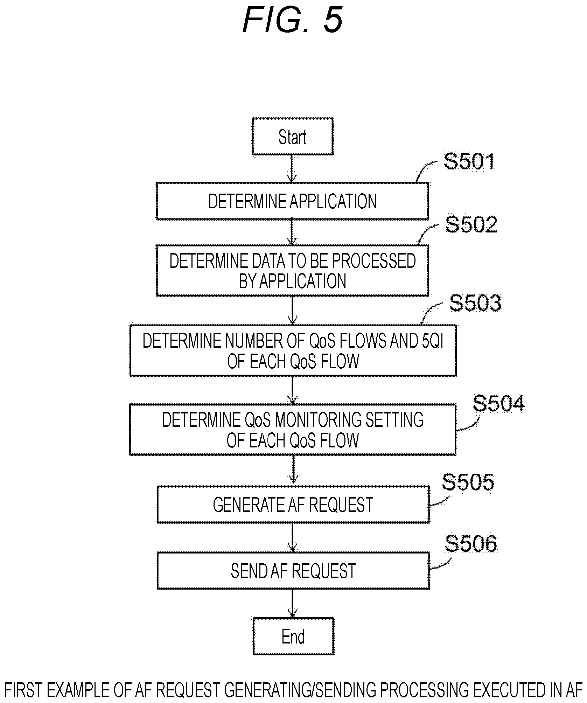

Fig. 5 is a flowchart for explaining a first example of AF request generating/sending processing which is one of processes executed by the AF 408 according to the present disclosure.

When the AF request generating/sending processing is started, the AF 408 determines an application to be executed by the application server 50 (S501). For example, the application executed by the application server 50 is an application that transmits an XR moving image. Each application executed by the application server 50 is identified by an application identifier.

Next, the AF 408 determines two or more pieces of data to be processed by the application determined in step S501 described above (S502). For example, the data to be processed by the application includes two types of data: uplink data including a measurement value of an inertial measurement unit (IMU) which is a sensor equipped in a head mount display (HMD); and downlink data including an XR moving image to be sent to the HMD. Note that the number of pieces of data to be processed by the application may be, for example, three or more, including audio data.

Subsequently, on the basis of the data determined in step S502 described above, the AF 408 determines the number of QoS flows to be allocated to one PDU session and a 5QI (QoS features) of each QoS flow (S503). The number of QoS flows is, for example, two in total, one for the uplink data including the measurement value of the inertial measurement unit and one for the downlink data including the XR moving image to be sent to the HMD. Furthermore, the AF 408 may add an instruction to set a PDU set to the downlink data including the XR moving image. Furthermore, the AF 408 may designate a port number of the application server 50 (alternatively, an edge application server on which some or all functions of the application server 50 are implemented) for each QoS flow. The designation of the port number for each QoS flow may be the N6 traffic routing information indicating a connection destination (for example, the port number) for each QoS flow to the UPF 430 supporting a service function chaining (SFC) function. Here, the AF 408 may notify the PCF 405 of the number of QoS flows in accordance with the number of connection destinations of the N6 traffic routing information in the AF request.

Subsequently, the AF 408 determines QoS monitoring setting for each QoS flow (S504). The QoS monitoring setting is, for example, setting of a timing to send a QoS monitoring result, and is only once, periodically, or an event trigger. In a case of sending the QoS monitoring result only once, the QoS monitoring result is sent as a response to the AF request including the QoS monitoring setting. In a case of periodically sending the QoS monitoring result, the QoS monitoring setting includes a sending cycle. In a case of sending the QoS monitoring result with an event trigger, the QoS monitoring setting includes a condition of the event. For example, the condition of the event is a state in which the QoS flow cannot satisfy a predetermined data rate or delay amount threshold.

Furthermore, in a case of using the edge application server, the QoS monitoring setting may include an instruction to directly send a QoS monitoring result of a QoS flow corresponding to data to be processed by the edge application server from a UPF (L-PSA UPF) installed at the local site to the edge application server.

Subsequently, in addition to or instead of the AF request described in Chapter 6, the AF 408 generates an AF request including an application ID, the number of QoS flows to be allocated to one PDU session, a 5QI (QoS features) of each QoS flow, QoS monitoring setting of each QoS flow, an instruction for setting a PDU set for a specific QoS flow, the N6 traffic routing information, and the like (S505).

Finally, the AF 408 sends the AF request generated in step S505 described above to the PCF 405 through the NEF 402 (S506).

Upon receiving the AF request from the AF 408, the PCF 405 creates a policy/rule necessary for establishing the PDU session, on the basis of parameters included in the AF request. For example, the PCF 405 creates, for each application ID, a policy/rule related to the number of QoS flows to be allocated to one PDU session, a policy/rule related to the 5QI (QoS features) of each QoS flow, a policy/rule related to the QoS monitoring setting of each QoS flow, a policy/rule for setting a PDU set for a specific QoS flow, and the like. Here, the policy/rule for the number of QoS flows may be generated on the basis of the N6 traffic routing information acquired through the AF request. The number of QoS flows is set on the basis of the number of connection destinations of the N6 traffic routing information.

Furthermore, in a case where the AF request from the AF 408 includes an instruction for using a QoS flow allocated with a specific 5QI, the PCF 405 may determine that a connection request from the UE 20 is intended to use edge computing, and create a policy/rule using edge computing. Alternatively, the AF 408 may include information instructing to use edge computing for processing of a specific QoS flow, and the PCF 405 may create a policy/rule using edge computing in accordance with the instruction.

Furthermore, the AF 408 may also generate an AF request including the number of QoS flows to be allocated to one PDU session, a 5QI (QoS features) of each QoS flow, QoS monitoring setting of each QoS flow, an instruction for setting a PDU set for a specific QoS flow, and the like that are different for a case where edge computing is available and a case where the edge computing is unavailable.

The PCF 405 creates, for each application ID, a policy/rule related to the number of QoS flows to be allocated to one PDU session, a policy/rule related to the 5QI (QoS features) of each QoS flow, a policy/rule related to the QoS monitoring of each QoS flow, a policy/rule for setting a PDU set for a specific QoS flow, and the like that are different for a case where edge computing is available and a case where the edge computing is unavailable. The SMF 406 selects any one of the policies/rules after determining whether or not edge computing is available.

In the above description, the QoS monitoring setting of each QoS flow is specifically a setting of whether to send the QoS monitoring result to the application server 50 through the SMF 406 or directly send the QoS monitoring result from the UPF 430 to the application server 50.

Similarly, the policy/rule related to the QoS monitoring of each QoS flow is specifically a policy/rule including an instruction as to whether to send the QoS monitoring result to the application server 50 through the SMF 406 or directly send the QoS monitoring result from the UPF 430 to the application server 50.

For example, in an edge hosting environment (EHE), data to be processed by the edge application server is sent or received through a QoS flow for which a low delay is required. The policy/rule related to the QoS monitoring of the QoS flow includes an instruction for directly sending the monitoring result from the UPF (L-PSA UPF) installed at the local site to the edge application server.

The generation of the AF request in step S505 described above may be performed collectively at one time, or may be performed by being divided into a plurality of parts. For example, after generation of a first AF request including the application ID, the number of QoS flows to be allocated to one PDU session, and the 5QI (QoS features) of each QoS flow as a common request independent of the UE 20, a second AF request may be generated including a PDU session ID, QoS flow identifiers (QFIs), QoS monitoring setting of each QoS flow, an instruction for setting a PDU set for a specific QoS flow, and the like at a timing of establishing a PDU session of a certain UE 20, as an optimized request for the UE 20.

Furthermore, the QoS monitoring setting of each QoS flow may be performed through the sending of the AF request in step S506 described above, or may be performed through the Npcf_PolicyAuthorization_Subscribe service of the PCF 405 or the Nupf_EventExposure_Notify service of the UPF 430 described above.

Moreover, in a case where a medium for XR includes an XR moving image and audio data, the AF request generated in step S505 described above may include information about a correspondence relationship of QoS flows that need to be synchronized, such as a QoS flow to which the XR moving image data is mapped and a QoS flow to which the audio data is mapped. Here, the information about the correspondence relationship of the QoS flows that need to be synchronized may include information such as synchronization accuracy, for example, a maximum allowable error.

As described above, in this first example, the AF 407 can determine the number of QoS flows to be allocated to one PDU session, the 5QI (QoS features) of each QoS flow, the QoS monitoring setting of each QoS flow, and the like in accordance with data to be processed by the application executed by the application server, and generate and send the AF request including these.

### (7-2. Second Example)

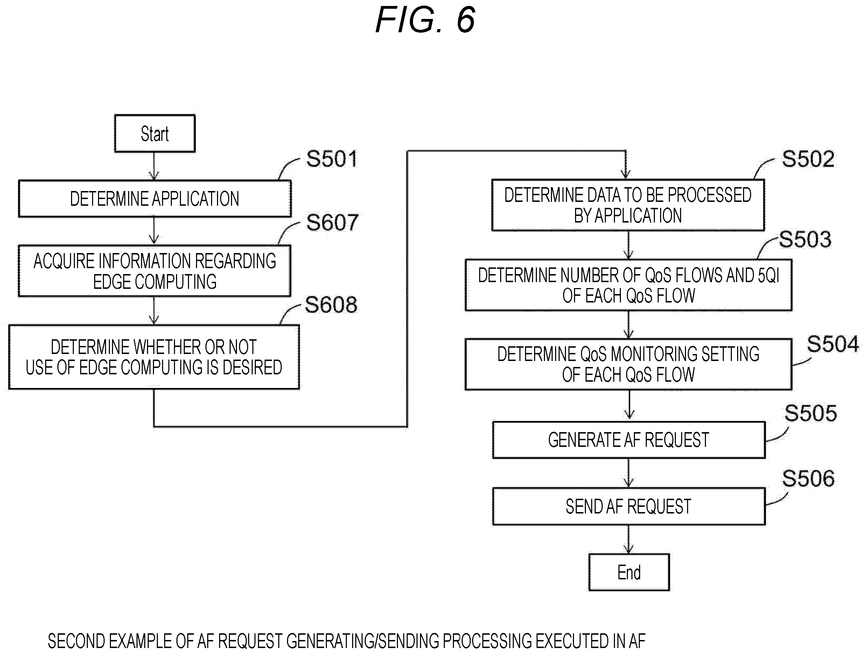

Fig. 6 is a flowchart for explaining a second example of the AF request generating/sending processing which is one of processes executed by the AF 408 according to the present disclosure.

When the AF request generating/sending processing is started, the AF 408 determines an application to be executed by the application server 50 (S501).

Next, the AF 408 acquires information regarding edge computing through any network function (NF) in the 5GC 40, for example, the NEF 402 (S607). Here, the information about the edge application server managed by the PLMN operator is stored in the UDR in the UDM 407, as edge application server deployment information (EAS deployment information). On the basis of the edge application server deployment information, the NEF 402 generates information to be disclosed to the AF 408 and regarding edge computing. The information regarding edge computing to be disclosed through the NEF 402 includes, for example, information about a connectivity model supported by the PLMN operator providing the 5G service.

Furthermore, the information regarding edge computing and to be disclosed through any NF in the 5GC 40 may also include a list of candidates of the edge application server managed by the PLMN operator. In this case, the UDR in the UDM 407 functions as a storage unit that stores the list of candidates of the edge application server. Moreover, the information regarding edge computing and to be disclosed through any NF in the 5GC 40 may include information about a position of each candidate of the edge application server.

Next, the AF 408 determines whether or not use of edge computing is desired at the time of establishing a PDU session, on the basis of the information regarding edge computing and acquired in step S607 described above (S608). Here, whether or not use of edge computing is desired may be determined on the basis of a connectivity model supported by the PLMN operator. For example, in a case where the PLMN operator supports a connectivity model of the distributed anchor point or the session breakout, the AF 408 determines that use of edge computing is desired. Furthermore, in a case where the connectivity model supported by the PLMN operator varies depending on an area/site, the AF 408 may determine whether or not the use of edge computing is desired on an area/site basis.

Subsequently, the AF 408 executes processing similar to steps S502 to S506 in Fig. 5 described above. However, the AF request generated in step S505 of Fig. 6 includes information about whether or not use of edge computing is desired, which is determined for each application in step S608 described above. Furthermore, in a case where whether or not use of edge computing is desired is determined on an area/site basis, information included in the AF request and regarding whether or not use of edge computing is desired may be on an area/site basis. The AF 408 can acquire information regarding edge computing on an area/site basis through the NEF 402. Alternatively, the information regarding edge computing and acquired in step S607 described above may be managed on an area/site basis.

Furthermore, the information regarding edge computing and acquired in step S607 in Fig. 6 may include information about an available connectivity model. The AF 408 may select one connectivity model for each application from among available connectivity models, and the AF request generated in step S505 of Fig. 6 may include, for each application, information about a connectivity model to be requested at the time of using edge computing.

Furthermore, the AF 408 may select a plurality of connectivity models for each application from among available connectivity models, and set priority levels for the connectivity models. As a result, in establishing the PDU session, a connectivity model with high priority level is selected from the available connectivity models.

Furthermore, the generation of the AF request in step S505 of Fig. 6 may be performed collectively at one time, or may be performed by being divided into a plurality of pieces. For example, as a common request independent of the UE 20, after a first AF request is generated including the application ID, the number of QoS flows to be allocated to one PDU session, and the 5QI (QoS features) of each QoS flow, a second AF request may be generated including the PDU session ID, the information about whether or not use of edge computing is desired, the information about the connectivity model requested at the time of using edge computing, and the like, at a timing of establishing a PDU session of a certain UE 20, as an optimized request for the UE 20.

Upon receiving the AF request from the AF 408, the PCF 405 creates a policy/rule necessary for establishing the PDU session, on the basis of parameters included in the AF request. For example, the PCF 405 creates, for one PDU session to be established for each application, a policy/rule for determining whether or not to use edge computing and a policy/rule for determining a connectivity model at the time of using edge computing. Note that these policies/rules may be created on an area/site basis.

Furthermore, as the information regarding edge computing through any NF in the 5GC 40, the PCF 405 may disclose a policy/rule created by itself for determining whether or not to use edge computing and a policy/rule for determining a connectivity model at the time of using edge computing.

As described above, in the second example, the AF 407 can acquire the information regarding edge computing, determine whether or not use of edge computing is desired, and generate and send the AF request including the information about whether or not use of edge computing is desired, the information about the connectivity model requested at the time of using edge computing, and the like.

### (7-3. Third Example)

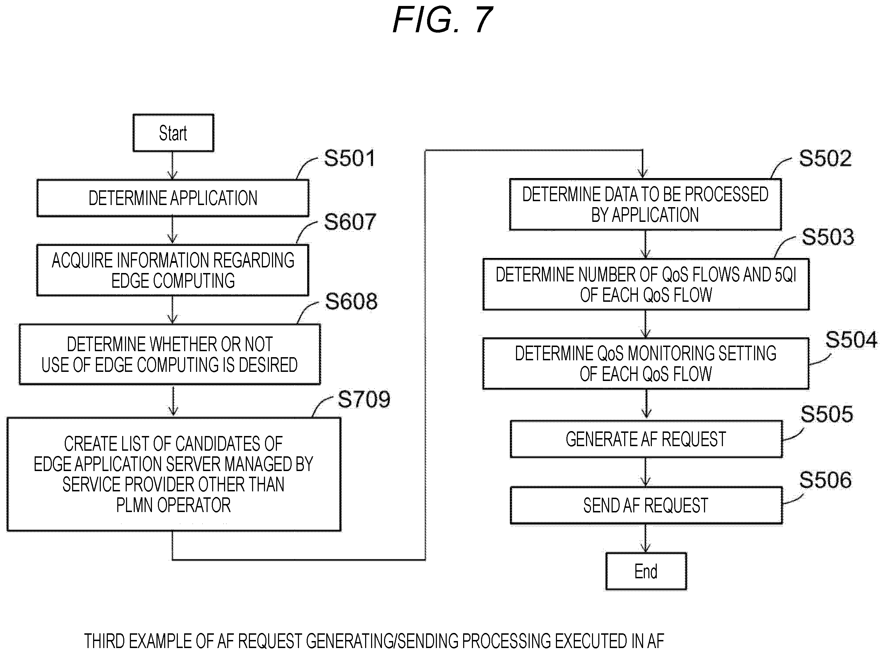

Fig. 7 is a flowchart for explaining a third example of the AF request generating/sending processing which is one of processes executed by the AF 408 according to the present disclosure.

When the AF request generating/sending processing is started, the AF 408 executes processing similar to steps S501 to S608 in Fig. 6 described above.

Subsequently, in a case where the AF 408 determines to use edge computing in step S508 in Fig. 6, the AF 408 creates a list of candidates of an edge application server managed by a service provider other than the PLMN operator (S709). This list includes an edge application server managed by the service provider itself, an edge application server that is managed by another service provider and for which the service provider has permission for use under a service level agreement (SLA) between with the another service provider, and the like.

Furthermore, the list of candidates of the edge application server managed by the service provider other than the PLMN operator may be created on an area/site basis. The AF 408 can acquire information about the area/site basis operated by the PLMN operator through the NEF 402. Moreover, the list of candidates of the edge application server managed by the service provider other than the PLMN operator may include information about a position of each candidate of the edge application server.

The list of candidates of the edge application server managed by the service provider other than the PLMN operator is provided, for example, as the edge application server deployment information (EAS deployment information). The edge application server deployment information includes a DNN, S-NSSAI, a group identifier, an application ID, a fully qualified domain name (FQDN), DNS server information, IP address information (EAS IP address range Information), and the like.

The group identifier includes an internal group identifier and an external group identifier. The NEF 402 may associate the external group identifier provided by the AF 408 and the internal group identifier, on the basis of information received from the UDM 407.

Subscription information for the UE 20 in the UDR may correlate a subscriber of the UE 20 with a group identified by the internal group identifier. That is, the edge application server deployment information for each of different internal group identifiers can be created for the same DNN and S-NSSAI.

Subsequently, the AF 408 executes processing similar to steps 502 to S506 in Fig. 6 described above. However, the AF request generated in step S505 of Fig. 7 includes the list generated in step S709 described above and including candidates of the edge application server managed by the service provider other than the PLMN operator. Here, the list of candidates of the edge application server managed by the service provider other than the PLMN operator may be on an area/site basis.

Furthermore, the generation of the AF request in step S505 of Fig. 7 may be performed collectively at one time, or may be performed by being divided into a plurality of pieces. For example, as a common request independent of the UE 20, after a first AF request is generated including the application ID, the number of QoS flows to be allocated to one PDU session, and the 5QI (QoS features) of each QoS flow, a second AF request may be generated including the PDU session ID, the list of candidates of the edge application server managed by the service provider other than the PLMN operator, and the like, at a timing of establishing a PDU session of a certain UE 20, as an optimized request for the UE 20. Here, the list of candidates of the edge application server may be a list of candidates corresponding to an area/site selected on the basis of a position of the UE 20.

In generating the AF request (second AF request) including the list of candidates of the edge application server managed by the service provider other than the PLMN operator, the AF 408 may activate edge application server deployment information generation (Nnef_EASDeployment_Create) service, and send an edge application server deployment information generation request (Nnef_EASDeployment_Create Request) message to the NEF 402.

The NEF 402 checks whether or not the AF 408 is approved to make a request and provide the edge application server deployment information, on the basis of a policy of the PLMN operator. In a case where these are approved, the NEF 402 checks the SLA between with the service provider. In a case there is the SLA, the NEF 402 sends a deployment management generation request (Nudr_DM_Create Request) message to the UDR in the UDM 407.

The UDR in the UDM 407 functions as a storage unit for the edge application server deployment information, and responds to the NEF 402 with a deployment management generation response (Nudr_DM_Create Response) message. Upon receiving the response from the UDR in the UDM 407, the NEF 402 sends an edge application server deployment information generation response (Nnef_EASDeployment_Create Response) message to the AF 408.

In a case where the edge application server deployment information is updated, the AF 408 may activate edge application server deployment information update (Nnef_EASDeployment_ Update) service, exchange messages with the NEF 402 and the UDR in a similar procedure to the edge application server deployment information generation service, and update the edge application server deployment information stored in the UDR.

Upon receiving the AF request from the AF 408, the PCF 405 checks the SLA between with the service provider that has sent the AF request, and creates a policy/rule for determining whether or not to use edge computing on the basis of the candidates, which are included in the AF request, of the edge application server managed by the service provider other than the PLMN operator. For example, in a case where there is the SLA between with the service provider, this policy/rule includes information that permits use of candidates of the edge application server managed by the service provider other than the PLMN operator. Furthermore, the policy/rule may be created on an area/site basis.

As described above, in the third example, the AF 407 can create the list of candidates of the edge application server managed by the service provider other than the PLMN operator, and generate and send an AF request including the list.

### <8. PDU Session Establishment Processing According to Present Disclosure>

The UE 20 that executes an application corresponding to an application ID specifies a data network name (DNN) of the DN 440 connected to the application server 50 that provides the application. The DNN is associated with the application server 50, and the UPF 430 can be connected to the application server 50 through the DNN of the DN 440. Here, the DN 440 and the application server 50 may be physically implemented in the same device.

Note that a network slice to be used for connection with the application server 50 may be designated for the application corresponding to the application ID. The network slice is identified by the S-NSSAI.

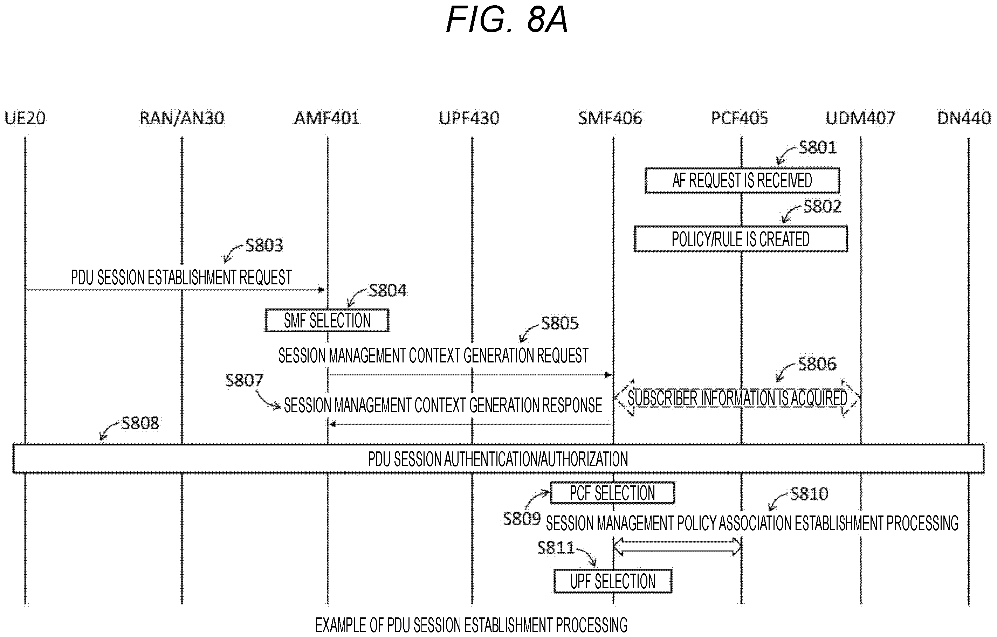

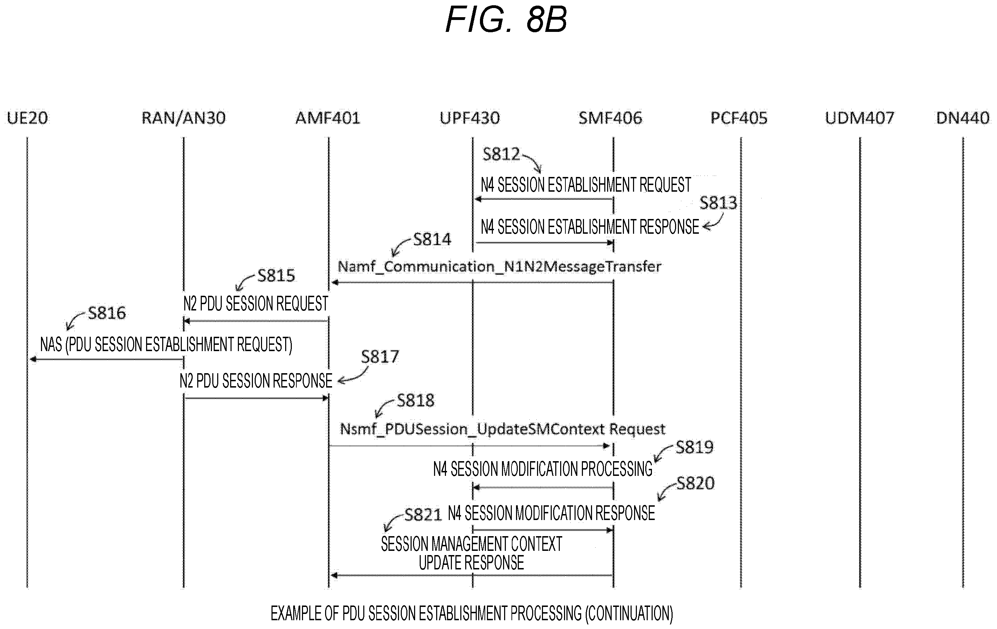

Fig. 8 is a sequence diagram for explaining an example of PDU session establishment processing according to the present disclosure.

The PCF 405 receives an AF request from the AF 408 (S801). This AF request is generated and sent by the AF 408 in accordance with any of the processing in Figs. 5 to 7 described above.

The PCF 405 creates a necessary policy/rule on the basis of the AF request received in step S801 described above (S802).

For example, in a case of the AF request generated according to the processing of Fig. 5 described above, the PCF 405 creates, for each application, a policy/rule related to the number of QoS flows to be allocated to one PDU session, a policy/rule related to the 5QI (QoS features) of each QoS flow, a policy/rule related to the QoS monitoring of each QoS flow, a policy/rule for setting a PDU set for a specific QoS flow, and the like, on the basis of parameters included in the AF request.

Here, the policy/rule related to the QoS monitoring of each QoS flow may include a policy/rule instructing to directly send a QoS monitoring result from a UPF (L-PSA UPF) installed at the local site to the edge application server, in a case where the QoS flow corresponds to data to be processed by the edge application server. This configuration enables real-time monitoring of data to be processed by the edge application server, in order to achieve low-delay data transmission, modification of a processing method on the application side according to a monitoring result, and the like.

Furthermore, for example, in a case of the AF request generated according to the processing of Fig. 6 described above, the PCF 405 creates, for one PDU session to be established for each application, a policy/rule for determining whether or not to use edge computing and a policy/rule for determining a connectivity model at the time of using edge computing. Note that these policies/rules may be created on an area/site basis.

Furthermore, for example, in a case of the AF request generated according to the processing of Fig. 7 described above, the PCF 405 creates a policy/rule for determining availability of candidates of the edge application server for one PDU session to be established for each application. Note that the policy/rule may be created on an area/site basis.

The UE 20 sends a PDU session establishment request message to the AMF 401 (S803). The AMF 401 selects the SMF 406 on the basis of at least one of the DNN, the S-NSSAI, or the application ID included in the received message (S804).

The AMF 401 sends a session management context generation request (Nsmf_PDUSession_CreateSMContext Request) message for a PDU session, to the selected SMF 406 (S805). The session management context generation request message includes a subscription permanent identifier (SUPI) and the S-NSSAI, and a UE request DNN or the DNN.

In a case where session management subscriber information (session management subscription data) corresponding to the SUPI, the S-NSSAI, and the DNN is unavailable, the SMF 406 that has received the session management context generation request message acquires the session management subscriber information from the UDM 407 by using an Nudm_SDM_Get message (S806). Furthermore, the SMF 306 registers in the UDM 307 using the Nudm_SDM_Subscribe message in order to be notified at the time of updating the session management subscriber information.

The SMF 406 generates a session management context (SM context) in a case where the session management context generation request message received in step S805 described above can be processed. The SMF 406 returns a session management context generation response (Nsmf_PDUSession_CreateSMContext Response) message including a session management context ID (SM Context ID) to the AMF 401 (S807).

In a case where second authentication and authorization processing by a DN-AAA server needs to be executed during the PDU session establishment processing, the SMF 406 activates PDU session authentication/authorization (PDUSession Authentication/Authorization) (S608). The SMF 406 executes PCF selection in a case where dynamic policy and charging control (PCC) is applied to the PDU session to be established (S809). Alternatively, the SMF 406 may apply a local policy.

Furthermore, the SMF 406 may also execute a session management policy association establishment processing (SM policy association establishment procedure) to establish a session management policy association (SM policy association) between with the PCF 405, and acquires a default PCC rule for the PDU session (S810). As a result, the SMF 406 can acquire the PCC rule before selecting the UPF 430.

For example, the PCC rule includes, for each application, a policy/rule related to the number of QoS flows to be allocated to one PDU session, a policy/rule related to the 5QI (QoS features) of each QoS flow, a policy/rule related to the QoS monitoring of each QoS flow, a policy/rule for setting a PDU set for a specific QoS flow, and the like.

Furthermore, the PCC rule may also include a policy/rule for determining whether or not to use edge computing and a policy/rule for determining a connectivity model at the time of using edge computing.

Furthermore, the PCC rule may also include a policy/rule for determining availability of candidates of the edge application server.

The SMF 406 may register edge application server deployment information change notification (EAS deployment information change notification) service with the NEF 402, in order to be notified of the edge application server deployment information including the list of candidates of the edge application server. The NEF 402 may activate edge application server deployment information notification (Nnef_EASDeployment_Notify) service in a case where there is a change in the edge application server deployment information, and provide the modified edge application server deployment information to the SMF 406 by using an edge application server deployment information notification request (Nnef_EASDeployment_Notify Request) message. For example, in a case where the edge application server deployment information is managed on an area/site basis, the edge application server deployment information corresponding to an area/site including a position of the UE 20 can be appropriately provided to the SMF 406.

The policy/rule for determining whether or not to use edge computing is, for example, a policy/rule for determining whether or not to use edge computing at the time of establishing a PDU session, on the basis of information about a position of a candidate of the edge application server and information about a position of the UE 20 or information about a position of the RAN/AN 30 to which the UE 20 is connected. The SMF 406 may determine whether or not to use edge computing in accordance with this policy/rule at the time of establishing a PDU session.

Furthermore, the policy/rule for determining whether or not to use edge computing may be a policy/rule for determining whether or not to use edge computing on the basis of identification information of the RAN/AN 30 to which the UE is connected. Here, the identification information of the RAN/AN 30 can be treated as information about a position of the RAN/AN 30 at granularity of a size of a cell. The SMF 406 may determine whether or not to use edge computing in accordance with this policy/rule at the time of establishing a PDU session.

The RAN/AN 30 may measure a delay between with candidates of the edge application server periodically or in response to an event, and the policy/rule for determining whether or not to use edge computing may include information about a delay with respect to one or more candidates of the edge application server corresponding to the RAN/AN 30 identification.

The SMF 406 may select one or more candidates of the edge application server on the basis of the identification information of the RAN/AN 30 to which the UE 20 is connected, and determine whether or not to use edge computing on the basis of a delay between with the selected candidate of the edge application server.

The PCF 405 may update the information about the delay between with one or more candidates of the edge application server included in the policy/rule, on the basis of a measurement result of the delay reported from the RAN/AN 30.

Furthermore, the policy/rule for determining whether or not to use edge computing may also include information about a delay between each of the one or more candidates for the UPF 430 and the one or more candidates of the edge application server selected for the RAN/AN 30.

A delay may be measured between each of the one or more candidates for the UPF 430 and a candidate of the edge application server periodically or in response to event, and the information about a delay included in the policy/rule for determining whether or not to use edge computing may be updated.

Furthermore, on the basis of the information about a delay between each of the one or more candidates of the UPF 430 and the one or more candidates of the edge application server, the policy/rule for determining whether or not to use edge computing may be information about mapping of candidates of the edge application server with the smallest delay for each UPF 430.

Moreover, the policy/rule for determining whether or not to use edge computing may be set on an area/site basis. In accordance with the policy/rule on an area/site basis, the SMF 406 may determine whether or not to use edge computing on the basis of information about a position of the UE 20 or information about a position of the RAN/AN 30 to which the UE 20 is connected.

Similarly, the policy/rule for determining a connectivity model at the time of using edge computing may be set on an area/site basis. In accordance with the policy/rule on an area/site basis, the SMF 406 may determine the connectivity model at the time of using edge computing on the basis of information about a position of the UE 20 or information about a position of the RAN/AN 30 to which the UE 20 is connected.

In a case where the PCC rule includes information indicating permission for use of candidates of the edge application server managed by the service provider other than the PLMN operator, the SMF 406 may select an edge application server from the candidates of the edge application server managed by the service provider other than the PLMN operator in addition to candidates of the edge application server managed by the PLMN operator.

Note that the policy/rule for determining whether or not to use edge computing and the policy/rule for determining a connectivity model at the time of using edge computing may be included in the edge application server deployment information.

The SMF 406 executes UPF selection in accordance with a preset rule or the PCC rule acquired in step S810 described above, to select one or more UPFs 430 (S811).

In a case where the SMF 406 determines to use edge computing at the time of establishing a PDU session, the SMF 406 determines a connectivity model in accordance with a policy/rule for determining a connectivity model at the time of using edge computing.

For example, in a case where a policy/rule for determining a connectivity model at the time of using edge computing instructs establishment of a PDU session by the session breakout, the C-PSA UPF installed at the central site and one or more L-PSA UPFs installed at the local site are selected.

Furthermore, for example, in a case where establishment of a PDU session by the distributed anchor point is instructed by a policy/rule for determining a connectivity model at the time of using edge computing, a PSA UPF installed at the local site is selected.

Note that the selection of the L-PSA UPF in the session breakout and the PSA UPF in the distributed anchor point is performed on the basis of a policy/rule for determining a connectivity model at the time of using edge computing or the edge application server deployment information. For example, a set of the edge application server and the UPF 430 with the smallest delay is selected from among one or more candidates of the UPF 430 selected for the RAN/AN 30 to which the UE 20 is connected.

The SMF 406 sends an N4 session establishment request message to the selected UPF 430 (S812). Through this N4 session establishment request message, setting of an N4 rule for controlling uplink and downlink traffic in the UPF 430 is performed.

For example, the N4 rule includes information about packet detection rule (PDR), forwarding action rule (FAR), QoS enforcement rule (QER), usage reporting rule (URR), buffering action rule (BAR), and the like. Moreover, QoS monitoring may be set through the N4 session establishment request message. For example, the UPF (L-PSA UPF) that processes a QoS flow corresponding to data to be processed by the edge application server may be set to directly report a monitoring result to the AF 408 that is a function of processing a control plane of the edge application server.

The PDR includes information necessary for classifying packets in the UPF 430. For example, the information necessary for classifying packets is set in accordance with a policy/rule related to the number of QoS flows to be allocated to one PDU session corresponding to an application ID acquired from the PCF 405, and a policy/rule related to the 5QI (QoS features) of each QoS flow. The UPF 430 may classify packets of the PDU session with a QFI corresponding to the 5QI.

The FAR includes information about a processing method for a specific packet, for example, forward, duplication, drop, buffer, or the like. The QER includes information about an instruction of QoS applied to traffic. For example, the information about an instruction of QoS applied to traffic is set in accordance with a policy/rule related to the 5QI (QoS features) of each QoS flow and acquired from the PCF 405. The URR includes information necessary for traffic measurement and reporting. The BAR includes a period of buffering and an amount of data to be buffered, and information about a notification method in the control plane.

Upon receiving the N4 session establishment request message, the UPF 430 returns an N4 session establishment response message to the SMF 406 (S813). Note that, in a case where a plurality of UPFs 430 is selected for the PDU session in step S809 described above, the N4 session establishment processing is started for each UPF 430.

For example, in a case where the SMF 406 determines to use edge computing at the time of establishing a PDU session, and selects to establish the PDU session by the session breakout in accordance with a policy/rule for determining a connectivity model at the time of using edge computing, the N4 session establishment request message is sent to the C-PSA UPF and one or more L-PSA UPFs.

Furthermore, for example, in a case where the SMF 406 determines to use edge computing at the time of establishing a PDU session, and selects establishment of a PDU session by the distributed anchor point in accordance with a policy/rule for determining a connectivity model at the time of using edge computing, the N4 session establishment request message is sent to one PSA UPF.

The SMF 406 sends a Namf_Communication_N1N2MessageTransfer message to the AMF 401 (S814). The Namf_Communication_N1N2MessageTransfer message includes a PDU session ID, N2 session management information (N2 SM Information), CN tunnel information (CN Tunnel Info), S-NSSAI, and an N1 session management container (N1 SM Container).

The N2 session management information includes a PDU session ID, QFI(s), a QoS profile, and the like. Here, the QoS profile may include information about a PDU set. For example, the QoS profile may include the information about a PDU set that has been set for a QoS flow corresponding to a specific QFI. Furthermore, in a case where a plurality of QoS flows is allocated to one PDU session, a QoS profile set including a plurality of QoS profiles may be provided.

In a case where a plurality of UPFs 430 is used for the PDU session, the CN tunnel information includes tunneling information related to the plurality of UPFs 430 that terminate N3.

For example, in a case where the SMF 406 determines to use edge computing at the time of establishing a PDU session, and selects to establish the PDU session by the session breakout in accordance with a policy/rule for determining a connectivity model at the time of using edge computing, the CN tunnel information includes tunneling information related to the C-PSA UPF and tunneling information related to one or more L-PSA UPFs.

Furthermore, for example, in a case where the SMF 406 determines to use edge computing at the time of establishing a PDU session, and selects to establish the PDU session by a distributed anchor point in accordance with a policy/rule for determining a connectivity model at the time of using edge computing, the CN tunnel information includes tunneling information regarding one PSA UPF.

The N1 session management container includes PDU session establishment accept and a QoS rule that should be provided to the UE 20 by the AMF 401. The PDU session establishment accept includes S-NSSAI. The Namf_Communication_N1N2MessageTransfer message includes a PDU session ID so that the AMF 401 knows which access to use for the UE 20.

The AMF 401 sends an N2 PDU session request (N2 PDU session request) message to the RAN/AN 30 (S815). The N2 PDU session request message includes a PDU session ID with the UE 20 as a destination, a NAS message including the N1 session management container, and N2 session management information received from the SMF 406.

The RAN/AN 30 acquires the PDU session ID, the QFI, the QoS profile, and the like from the N2 session management information included in the N2 PDU session request message. Furthermore, the RAN/AN 30 forwards the NAS message included in the N2 PDU session request message to the UE 20 (S816). As described above, the NAS message includes the PDU session ID and the N1 session management container, and the N1 session management container includes the PDU session establishment accept and the QoS rule.

Furthermore, the RAN/AN 30 allocates AN tunnel information (AN Tunnel Info) to the PDU session. The AN tunnel information includes a tunnel endpoint of each involved RAN/AN node and QFIs allocated to individual tunnel endpoints.

The RAN/AN 30 updates the N2 session management information for a notification to the SMF 406. The N2 session management information includes information such as a PDU session ID, AN tunnel information, a list of permitted or denied QFI(s), and user plane enforcement policy notification.

The RAN/AN 30 returns an N2 PDU session response message including the N2 session management information to the AMF 401 (S817).

The AMF 401 acquires the N2SM information through the N2 PDU session response received from the RAN/AN 30, and forwards, to the SMF 406, a session management context update request message (Nsmf_PDUSession_UpdateSMContext Request) of the PDU session including the session management context ID and the obtained N2 session management information (S818).

The SMF 406 activates N4 session modification processing (N4 session modification procedure) between with the UPF 430, and sends an N4 session modification request message to the UPF 430 (S819). The SMF 406 provides the UPF 430 with AN tunnel information in addition to a forwarding rule.

The UPF 430 returns an N4 session modification response message to the SMF 406 (S820). Note that, in a case where a plurality of UPFs 430 is used in the PDU session, the session modification processing described above is performed on all the UPFs 430 that terminate N3.

Upon receiving the N4 session modification response from the UPF 430, the SMF 406 returns a session management context update response message (Nsmf_PDUSession_UpdateSMContext Response) to the AMF 401 (S821).

Through the processing above, a PDU session for connection with the application server 50 is established. One DNN and one S-NSSAI are associated with the PDU session.

### <9. Processing Executed by Application Server According to Present Disclosure>

### (9-1. First Example)

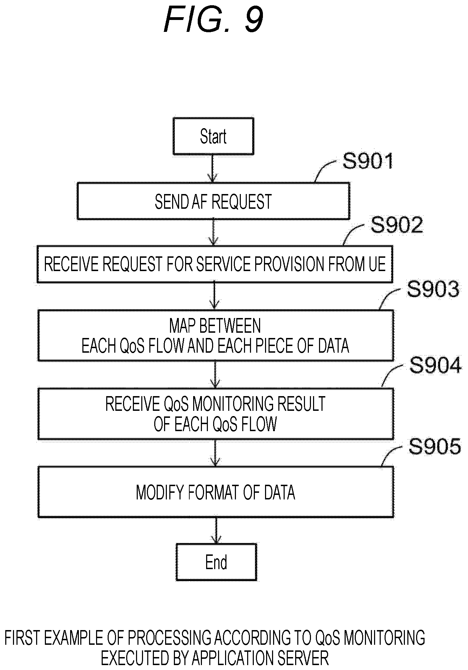

Fig. 9 is a diagram illustrating a first example of processing according to QoS monitoring and executed by the application server 50, according to the present disclosure.

The application server 50 sends an AF request in accordance with the above-described AF request generating/sending processing illustrated in Fig. 5, through the AF 408 which is a function of processing its own control plane (S901).

When the UE 20 executes an application corresponding to an application ID, a PDU session is established between the UE 20 and the UPF 430 in accordance with the PDU session establishment processing illustrated in Fig. 8 described above. This PDU session is connected to the application server 50 through the DNN of the DN 440. The AF 408 acquires, from the SMF 406 through the NEF 402, information about a type of QoS flow to be allocated to the established PDU session. The information about the type of QoS flow is, for example, the 5QI (QoS features).

The application server 50 receives a request for service provision through the PDU session of the application corresponding to the application ID, from the UE 20 (S902).

The application server 50 respectively maps two or more pieces of data to be processed by the application, to two or more QoS flows to be processed by the established PDU session (S903).

For example, in a case of an application that transmits an XR moving image, uplink data including a measurement value of an inertial measurement unit which is a sensor equipped in an HMD is mapped to an uplink QoS flow, and downlink data including an XR moving image sent to the HMD is mapped to a downlink QoS flow. Note that, in a case where setting of a PDU set is instructed for the QoS flow, a PDU set constituting data in units of information generated at an application level is set, for example, data for each image frame or video slice, or a PDU set constituting an I frame, a P frame, and a B frame of moving image data in a GOP format is set.

The application server 50 receives a QoS monitoring result of each QoS flow through the AF 408 (S904).

Subsequently, in a case where the QoS monitoring result received in step S904 described above does not satisfy a desired condition, the application server 50 modifies a format of data to be mapped to the QoS flow that also does not satisfy the desired condition (S905), and ends the processing (End).

For example, in a case of an application that transmits an XR moving image, when it is determined that a required transmission delay is not satisfied on the basis of a QoS monitoring result of a QoS flow to which the downlink data including the XR moving image is mapped, the application server 50 modifies a format of the downlink data to lower resolution to reduce a data size, in order to improve a transmission delay. Note that, in a case where setting of a PDU set is instructed in the QoS flow, the PDU set is also reset.

Furthermore, in a case where the established PDU session is updated and a type of QoS flow to be allocated is modified, the AF 408 acquires information about the type of QoS flow to be allocated to the updated PDU session from the SMF 406 through the NEF 402. Thereafter, the processing of step S904 described above and subsequent steps is executed.

As described above, in the first example, in a case where a QoS monitoring result does not satisfy a desired condition, the application server 50 modifies a format of data to be mapped to the QoS flow that does not satisfy the desired condition.

### (9-2. Second Example)

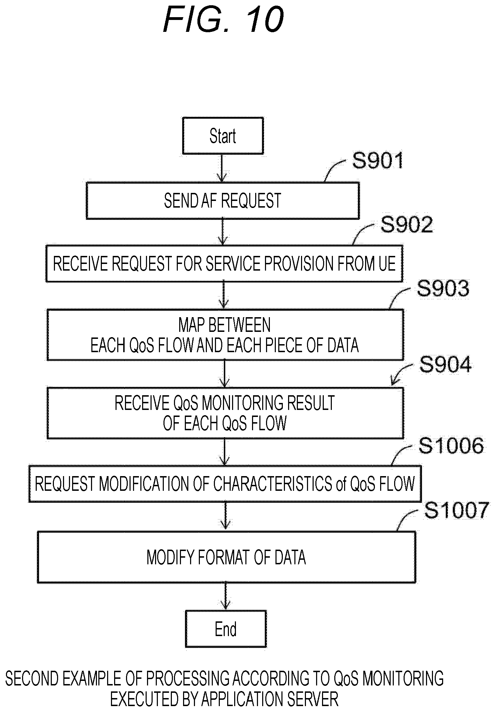

Fig. 10 is a diagram illustrating a second example of processing according to QoS monitoring and executed by the application server 50.

The application server 50 executes processing similar to steps S901 to S904 in Fig. 9 described above.

Subsequently, in a case where a QoS monitoring result received in the above-described step S904 does not satisfy a desired condition, the application server 50 requests modification of characteristics of the QoS flow that does not satisfy the desired condition, in order to modify a format of data to be mapped to the QoS flow that does not satisfy the desired condition and transmit the data (S1006).

For example, in a case of an application that transmits an XR moving image, when it is determined that a required data rate is not satisfied on the basis of a QoS monitoring result of a QoS flow to which the downlink data including the XR moving image is mapped, the application server 50 requests modification of characteristics (data rate) of the QoS flow through the AF request again through the AF 408. For example, the modification of the data rate of the QoS flow may be achieved by modifying a 5QI to be mapped to a QFI to be allocated to the QoS flow. In this case, the AF request again includes the requested 5QI and the QFI which is information specifying the QoS flow whose data rate is to be modified.

Upon receiving the AF request again from the application server 50, the PCF 405 modifies a policy/rule related to the 5QI (QoS features) of each QoS flow. In accordance with this updated policy/rule, the SMF 406 modifies the N4 rule for the UPF 430.

The application server 50 modifies the format of the data to be mapped to the modified QoS flow in accordance with the characteristics of the modified QoS flow (S1007), and ends the processing (End). Note that, in a case where setting of a PDU set is instructed in the QoS flow, a PDU set constituting data in units of information generated at an application level is also reset, for example, data for each image frame or video slice, or a PDU set constituting an I frame, a P frame, and a B frame of moving image data in a GOP format is also reset.

As described above, in the second example, in a case where a QoS monitoring result does not satisfy a desired condition, the application server 50 requests modification in characteristics of the QoS flow in order to modify the format of the data and transmit the data.

### (9-3. Third Example)

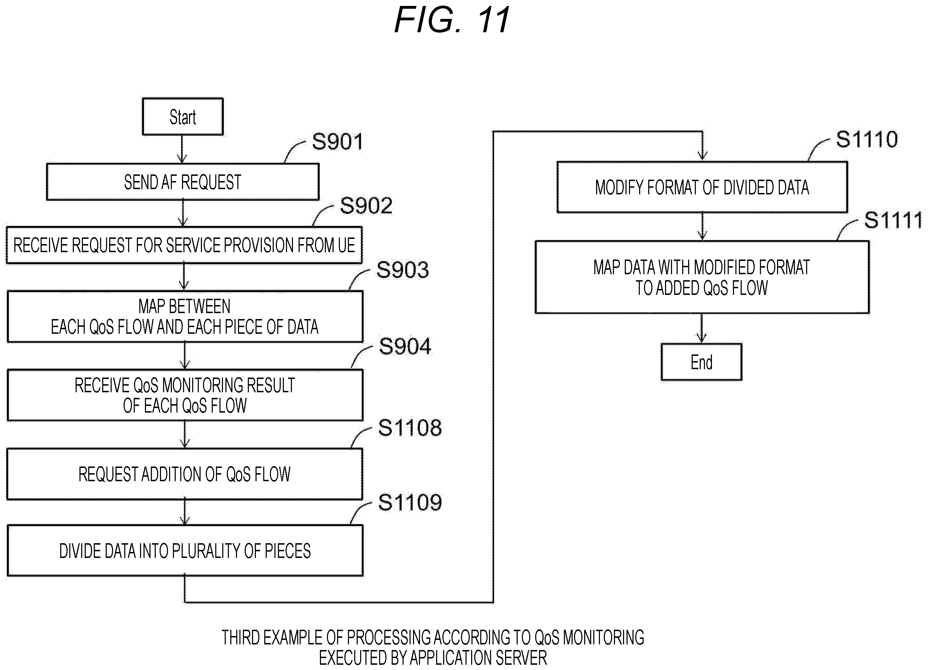

Fig. 11 is a diagram illustrating a third example of processing according to QoS monitoring and executed by the application server 50.

The application server 50 executes processing similar to steps S901 to S904 in Fig. 9 described above.

Subsequently, in a case where a QoS monitoring result received in step S904 described above does not satisfy a desired condition, the application server 50 requests addition of a QoS flow through the AF request again through the AF 408, in order to divide and transmit a part of data (S1108). For example, the request for adding the QoS flow may include characteristics required for the QoS to be added, for example, the 5QI. Furthermore, the request for adding the QoS flow may include a candidate port number for connecting to the application server 50 for the QoS flow to be added.

For example, in a case of an application that transmits an XR moving image, when it is determined that a required data rate is not satisfied on the basis of a QoS monitoring result of a QoS flow to which downlink data including the XR moving image is mapped, the application server 50 divides XR moving image data into a plurality of pieces as illustrated in Fig. 1, for example, and requests addition of a QoS flow for mapping the divided data with reduced resolution through the AF request again through the AF 408, in order to reduce resolution of some of the divided data and transmit the data. For example, the AF request again includes the requested 5QI and information about the number of QoS flows requested to be added.

Upon receiving the AF request again from the application server 50, the PCF 405 modifies a policy/rule related to the number of QoS flows to be allocated to one PDU session and a policy/rule related to the 5QI (QoS features) of each QoS flow. In accordance with these updated polices/rules, the SMF 406 modifies the N4 rule for the UPF 430.

When setting of the already established PDU session is updated in accordance with the AF request again described above, and the QoS flow is added to the updated PDU session, the application server 50 acquires, as a response to the AF request again described above, a QFI for identifying each QoS flow and information about the 5QI to be mapped to each QFI.

Upon receiving the response to the AF request again described above, the application server 50 divides data to map to the added QoS flow (S1109). For example, in a case of an application that transmits an XR moving image, the XR moving image data is divided into a plurality of pieces as illustrated in Fig. 1, for example.

The application server 50 modifies a format of some of the data divided in the step S1109 described above, in accordance with the 5QI corresponding to the added QoS flow (S1110). For example, in a case of an application that transmits an XR moving image, in order to reduce a size of transmission data, resolution of some data of divided XR moving image data is reduced.

The application server 50 maps the data whose format has been modified in the step S1110 described above to the QoS flow added in the step S1108 described above (S1111), and ends the processing (End). Note that, in a case where setting of a PDU set is instructed in the QoS flow, a PDU set constituting data in units of information generated at an application level is set, for example, data for each image frame or video slice, or a PDU set constituting an I frame, a P frame, and a B frame of moving image data in a GOP format is set.

As described above, in the third example, in a case where a QoS monitoring result does not satisfy a desired condition, the application server 50 divides at least one piece of data among data into a plurality of pieces, and requests addition of a QoS flow in order to modify a format of some of the divided data and transmit the data.

### <10. Control of Operation Mode of Wireless Terminal Device According to Present Disclosure>

Examples of an application for a wireless terminal device for which a low delay is required include an application using an artificial intelligence (AI)/machine learning (machine learning) model. Since calculation resources of the wireless terminal device are limited, some or all of processing is generally performed on a cloud server in the application using the AI/ML model.

For example, in a case where the AI/ML model is used for a purpose such as image recognition or voice recognition, a low delay is required for communication between the wireless terminal device and the cloud server. Furthermore, an edge application server is assumed to be used as the cloud server.

Furthermore, inference processing based on the AI/ML model is often performed not continuously but intermittently. Therefore, in a case where general control of transitioning to an idle mode (for example, RRC_IDLE) as much as possible is applied in order to reduce power consumption of the wireless terminal device, there is a concern that a PDU session is established every time the intermittent processing is executed, time (that is, a delay in the control plane) required for transition from the idle mode to a connected mode (for example, RRC_CONNECTED) becomes long, and quality of experience (QoE) of the application using the AI/ML model is degraded.

Although it is possible to reduce a delay in the data plane by using the edge application server, it is also desirable to reduce a delay in the control plane at the time of establishing the PDU session.

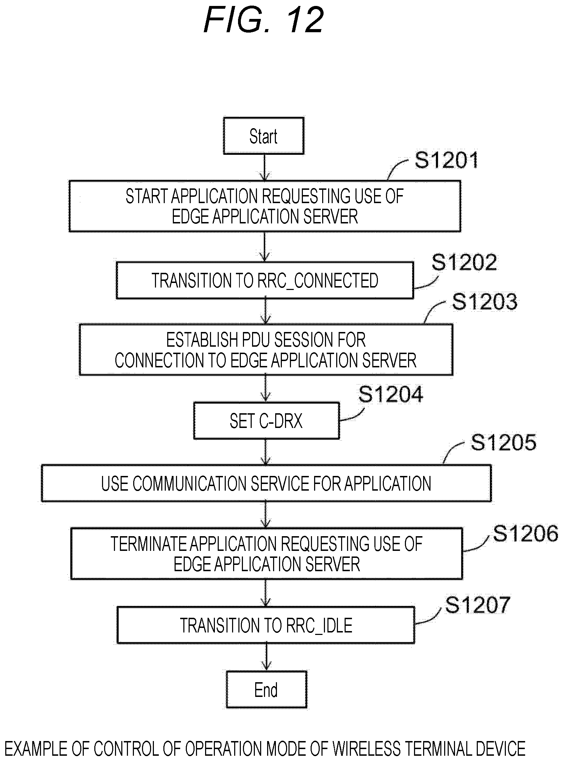

Fig. 12 is a flowchart illustrating an example of control of an operation mode of the wireless terminal device according to the present disclosure. The wireless terminal device is a device corresponding to the UE 20 in the 5GS.

The AF 408 requests a 5GS as to whether or not to set connected mode DRX (C-DRX) for each application through an AF request in advance. Moreover, the AF 408 may designate a condition for setting the C-DRX. For example, the condition is a case of establishing a PDU session for connection with the edge application server.

Upon receiving the AF request from the AF 408, the PCF 405 adds information about whether or not to set the C-DRX and the condition in setting the C-DRX, to a policy/rule for determining use of edge computing for one PDU session to be established for each application.

When the processing of Fig. 12 is started, the wireless terminal device starts an application requesting use of the edge application server (S1201).

When the wireless terminal device executes initial access to a base station device, RRC connection is established between the wireless terminal device and the base station device, and the wireless terminal device transitions from RRC_IDLE to RRC_CONNECTED (S1202). Here, the base station device is a device corresponding to the RAN/AN 30 in the 5GS.

When the wireless terminal device sends a PDU session establishment request message (PDU session establishment request) to the AMF 401, the SMF 406 establishes a PDU session for connection to the edge application server in accordance with the PDU session establishment processing in Fig. 8 described above (S1203). Here, the SMF 406 acquires a PCC rule in the session management policy association establishment processing in step S810 in Fig 8.

The SMF 406 determines to set the C-DRX for the PDU session in accordance with a policy/rule that is included in the acquired PCC rule and that determines whether or not to use edge computing.

The SMF 406 sends the N2 session management information including an instruction for setting of the C-DRX, to the base station device (RAN/AN 30) through the Namf_Communication_N1N2MessageTransfer message in step S814 in Fig. 8.

At the time of establishing the PDU session for connection with the edge application server, the base station device sets the C-DRX in the wireless terminal device by using RRC connection setup or RRC connection resetting (RRC ConnectionReconfiguration) (S1204).

The base station device sets a value of longDRX-Cycle in accordance with a monitoring cycle of PDCCH for the C-DRX, and sets values of drxStartOffset and onDurationTimer on the basis of a slot position to which the PDCCH is allocated.

Furthermore, the base station device receives scheduling information through the PDCCH for the C-DRX, and sets drx-InactivityTimer as a period for receiving data indicated by the scheduling information.

Moreover, the base station device may set short DRX in addition to long DRX. The short DRX is set by drxShortCycleTimer and shortDRX-Cycle.

The wireless terminal device in the connected mode monitors the PDCCH in accordance with the setting of the long DRX. When the wireless terminal device successfully demodulates the PDCCH including the scheduling information during a period in which the onDurationTimer is valid, the wireless terminal device can start the drx-InactivityTimer and receive data indicated by the scheduling information during a period in which the drx-InactivityTimer is valid.

When the valid period of the drx-InactivityTimer expires, the wireless terminal device starts drxShortCycleTimer, and monitors the PDCCH with a cycle of shortDRX-Cycle having a frequency higher than that of longDRX-Cycle over a period in which the drxShortCycleTimer is valid.

The wireless terminal device can secure QoS of packets sent in a short period, for example, by monitoring the PDCCH with the shortDRX-Cycle. Here, the packets sent in the short period is, for example, a payload constituting a PDU set. When the valid period of drxShortCycleTimer expires, the wireless terminal device resumes periodic monitoring of the PDCCH in accordance with the setting of the long DRX.

Here, a value of longDRX-Cycle may be set on the basis of periodicity or periodicityExt of SPS-Config for setting semi-persistent scheduling (SPS) or ConfiguredGrantConfig for setting configured grant (CG).

A value of shortDRX-Cycle may be set on the basis of a cycle of each PDU constituting the PDU set.

The wireless terminal device in which the C-DRX is set in step S1204 described above uses communication service for an application between with the edge application server (S1205).

When the wireless terminal device terminates the application requesting use of the edge application server (S1206), the PDU session for connection with the edge application server is released.

The wireless terminal device transitions from RRC_CONNECTED to RRC_IDLE (S1207), and ends the processing (End).

Note that, in step S1206 described above, in addition to or instead of explicitly ending the application, the wireless terminal device may release the PDU session for connection with the edge application server at a timing when a predetermined period has elapsed since most recent sending or receiving of data. For example, the wireless terminal device may start a timer in which a predetermined period is set or reset every time data is sent or received, and release the PDU session in accordance with expiration of a valid period of the timer.

According to the above processing, when the wireless terminal device that has activated the service requiring a low delay establishes the PDU session for connection with the edge application server once, it is possible to reduce an influence of a delay on the control plane by operating the wireless terminal device with the C-DRX while the application is activated.

Note that, in a case where the application is relatively tolerant to a delay occurring between with the edge application server, the base station device may set the DRX in an inactive mode (RRC_INACTIVE) in the wireless terminal device instead of the C-DRX. The inactive mode is a transition state that can reduce a load of network signaling and reduce transition time to the connected mode as compared with the idle mode. The wireless terminal device is allowed to perform an operation equivalent to the idle mode from the viewpoint of power consumption. From the viewpoint of mobility, the wireless terminal device can move in a set area, that is, within an RAN-based notification area (RNA), without notifying the base station device while being in the CM-CONNECTED state.

The PCF 405 may create a policy/rule for setting the C-DRX or inactive mode DRX (I-DRX) as a local rule in the PLMN, for the wireless terminal device that establishes the PDU session using the edge application server.

Alternatively, a service provider providing the application may generate an AF request including an instruction for setting the C-DRX or the I-DRX and a value of each parameter for setting the C-DRX or the I-DRX at the time of establishing a PDU session using the edge application server, in the generation processing of the AF request in Fig. 5 described above.

The PCF 405 may create, in accordance with the AF request, a policy/rule for setting the C-DRX or the I-DRX for the wireless terminal device that establishes the PDU session for an application that uses an edge application server.

### <11. Conclusion>

The description has been given to the technology that can set individually different QoS for each data flow in a case where a plurality of types of data is exchanged, and can improve QoS by modifying a format of data in a case where QoS of a certain data flow does not satisfy a desired condition. The technology according to the present disclosure can be applied to any application that requires exchange of a plurality of types of data within one application.

Note that the technology according to the present disclosure is not limited to a specific standard, and the exemplified setting may be appropriately modified. Note that each of the above-described examples illustrates an example for embodying the present disclosure, and the present disclosure can be implemented in other various forms. For example, various modifications, substitutions, omissions, combinations, or the like can be made without departing from the gist of the present disclosure. Forms with such modifications, substitutions, omissions, combinations, or the like are also included in the scope of the present disclosure and are included in the invention described in the claims and the equivalent scope thereof.

Furthermore, the procedures of processing described in the present disclosure may be regarded as a method having a series of these procedures. Alternatively, the procedures of processing may be regarded as a program for causing a computer to execute the series of procedures or a recording medium storing the program. Furthermore, the processing described above is executed by a processor such as a CPU of a computer. Furthermore, a type of the recording medium is not particularly limited since it does not affect the examples of the present disclosure.

Note that each component illustrated in the present disclosure may be realized by software or hardware. For example, each component may be a software module realized by software such as a microprogram, and each component may be realized by the processor executing the software module. Alternatively, each component may be realized by a circuit block on a semiconductor chip (die), for example, an integrated circuit such as an application specific integrated circuit (ASIC) or a field programmable gate array (FPGA). Furthermore, the number of components and the number of pieces of hardware for realizing the components may not coincide with each other. For example, one processor or circuit may realize a plurality of components. Conversely, one component may be realized by a plurality of processors or circuits.

Note that the type of the processor described in the present disclosure is not limited. For example, the processor may be a CPU, a micro processing unit (MPU), a graphics processing unit (GPU), or the like.

Note that the present disclosure can also have the following configurations.

### <Application server device>

[1] (Claim 1) (Example 1, Example 2, Example 3) A server device including a processing execution unit, in which
   the processing execution unit executes:
   a process of determining two or more pieces of data to be allocated to one PDU session (Fig. 5: S502);
   a process of determining a number of two or more QoS flows to be allocated to the one PDU session, a characteristic of each QoS flow, and monitoring setting of each QoS flow (Fig. 5: S503, S504);
   a process of generating a request including the number of QoS flows, the characteristic of each QoS flow, and the QoS monitoring setting of each QoS flow (Fig. 5: S505);
   a process of sending the request (Fig. 5: S506);
   a process of mapping the two or more pieces of data individually to the two or more QoS flows to be allocated to the one PDU session (Fig. 9: S903);
   a process of receiving a QoS monitoring result of the two or more QoS flows (Fig. 9: S904); and
   a process of modifying a format of at least one piece of data among the two or more pieces of data in a case where the received QoS monitoring result does not satisfy a desired condition (Fig. 9: S905, Fig. 10: S1007, Fig. 11: S1110).
[2] (Claim 2) (Example 1) The server device according to [1], in which
   in a case where the acquired QoS monitoring result does not satisfy a desired condition,
   the processing execution unit executes:
      a process of modifying a format of data to be mapped to a QoS flow that does not satisfy the desired condition (Fig. 9: S905).
[3] (Old Claim 3) (Example 2) The server device according to [1], in which
   in a case where the acquired QoS monitoring result does not satisfy a desired condition,
   the processing execution unit executes:
      a process of requesting modification in a characteristic of a QoS flow that does not satisfy the desired condition (Fig. 10: S1006), and
      a process of modifying a format of data to be mapped to the QoS flow subjected to modification (Fig. 10: S1007).
[4] (Claim 4) (Example 3) The server device according to [1], in which
   in a case where the acquired QoS monitoring result does not satisfy a desired condition,
   the processing execution unit executes:
      a process of requesting addition of a QoS flow to be allocated to the one PDU session (Fig. 11: S1108);
      a process of dividing at least one piece of data among the two or more pieces of data into a plurality of pieces (Fig. 11: S1109);
      a process of modifying a format of at least one piece of data among divided pieces of the data (Fig. 11: S1110); and
      a process of mapping the at least one piece of data subjected to modification to the added QoS flow (Fig. 11: S1111).
[5] The server device according to [4], in which
   the format is resolution of moving image data, and
   the processing execution unit executes:
      a process of modifying resolution of at least one piece of data among divided pieces of the data to be lower than resolution of another piece among divided pieces of the data.
[6] The server device according to [4], in which
   one of the two or more pieces of data is data of a measurement value of a sensor included in a wireless terminal device, and
   the processing execution unit executes:
      a process of modifying a format of each of divided pieces of the data on the basis of the data of the measurement value of the sensor.
[7] (Claim 5) (Example 2) The server device according to [1], in which
   the processing execution unit executes:
   a process of acquiring information regarding edge computing (Fig. 6: S607);
   a process of determining whether or not use of edge computing is desired at a time of establishing the one PDU session, on the basis of the information regarding edge computing (Fig. 6: S608); and
   a process of generating the request including information indicating whether or not use of the edge computing is desired (Fig. 6: S505).
[8] (Claim 6) (Example 2) (Paragraph [0127]) The server device according to [7], in which
   the information regarding edge computing includes information about an available connectivity model, and
   the processing execution unit executes:
      a process of selecting one or more connectivity models from the available connectivity model; and
      a process of generating the request including information about the one or more connectivity models that have been selected (Fig. 6: S505).
[9] The server device according to [8], in which the information about the available connectivity model includes at least information about a distributed anchor point, session breakout, or multiple PDU sessions.
[10] (Claim 7) (Example 3) The server device according to [7], in which
   the processing execution unit executes:
   a process of creating a list of a candidate of an edge application server managed by a service provider other than a PLMN operator (Fig. 7: S709); and
   a process of generating the request including the list (Fig. 7: S505).
[11] (Claim 8) (Example 1) (Paragraph [0111]) The server device according to [1], in which
   the processing execution unit executes:
   a process of generating the request including the number of QoS flows, the characteristic of each QoS flow, and the QoS monitoring setting of each QoS flow, in which the number of the QoS flows, the characteristic of each QoS flow, and the QoS monitoring setting of each QoS flow vary between a case where edge computing is available and a case where the edge computing is unavailable (Fig. 5: S505).
[12] (Claim 9) (Paragraph [0261]) The server device according to [1], in which
   the processing execution unit executes:
   a process of generating the request including information instructing to set C-DRX or I-DRX, to a wireless terminal device as an end destination of the one PDU session, at a time of establishing the one PDU session using edge computing (Fig. 5: S505).
[13] (Claim 10) (Paragraphs [0246] to [0248]) The server device according to [12], in which
   the processing execution unit executes:
   a process of generating the request including a value of at least one parameter, for the C-DRX or the I-DRX, among longDRX-Cycle, drxStartOffset, onDurationTimer, drx-InactivityTimer, drxShortCycleTimer, and shortDRX-Cycle (Fig. 5: S505).

### <Application execution method>

[14] (Claim 11) (Example 1, Example 2, Example 3) An application execution method including:
a step of determining two or more pieces of data to be allocated to one PDU session (Fig. 5: S502);
a step of determining a number of two or more QoS flows to be allocated to the one PDU session, a characteristic of each QoS flow, and QoS monitoring setting of each QoS flow (Fig. 5: S503, S504);
a step of generating a request including the number of QoS flows, the characteristic of each QoS flow, and the QoS monitoring setting of each QoS flow (Fig. 5: S505);
a step of sending the request (Fig. 5: S506);
a step of mapping the two or more pieces of data individually to the two or more QoS flows to be allocated to the one PDU session (Fig. 9: S903);
a step of receiving a QoS monitoring result of the two or more QoS flows (Fig. 9: S904); and
a step of modifying a format of at least one piece of data among the two or more pieces of data in a case where the received QoS monitoring result does not satisfy a desired condition (Fig. 9: S905, Fig. 10: S1007, Fig. 11: S1110).

### <Core network device>

[15] (Claim 12) (Example 1, Example 2, Example 3) (Paragraph [0109]) A core network device including a processing execution unit, in which
   the processing execution unit executes:
   a process of receiving a request including a number of two or more QoS flows to be allocated to one PDU session, a characteristic of each QoS flow, and QoS monitoring setting of each QoS flow;
   a process of establishing the one PDU session in response to a connection request from a wireless terminal device; and
   a process of allocating two or more QoS flows to the one PDU session on the basis of the request, and setting the characteristic and the QoS monitoring to each QoS flow.
[16] (Claim 32) (Example 1) (Paragraph [0111]) The core network device according to [15], in which
   the processing execution unit:
   a process of determining that the connection request from the wireless terminal device is intended for use of edge computing in a case where the request includes an instruction for using a QoS flow to which a specific characteristic is allocated, and creating a policy/rule for using the edge computing.
[17] (Claim 14) (Example 1) (Paragraph [0112]) The core network device according to [15], in which
   a policy/rule related to QoS monitoring of a QoS flow to which data to be processed by an edge application server is mapped among the two or more QoS flows includes an instruction for a UPF that processes the QoS flow to directly send a monitoring result of the QoS flow to the edge application server.
[18] (Claim 15) (Example 2) (Paragraph [0122]) The core network device according to [15], in which
   the processing execution unit executes:
   a process of disclosing information regarding edge computing, through any network function of a core network.
[19] The core network device according to [18], in which
   the disclosed information regarding edge computing includes information about a connectivity model supported by a PLMN operator.
[20] The core network device according to [19], in which
   the information about the connectivity model includes at least information about a distributed anchor point, session breakout, or multiple PDU sessions.
[21] (Claim 16) (Example 2) (Paragraph [0123]) The core network device according to [18], further including:
   a storage unit configured to store a first list of a candidate of an edge application server managed by a PLMN operator, in which
   the information regarding edge computing includes the first list.
[22] The core network device according to [21], in which
   the information regarding edge computing includes information about a position of each candidate of the edge application server included in the first list.
[23] (Claim 17) (Fig. 8) (Paragraphs [0165]) The device according to [18], further including:
   a storage unit configured to store a first list of a candidate of an edge application server managed by a PLMN operator, in which
   the processing execution unit executes:
      a process of creating a policy/rule for determining whether or not to use the edge computing, on the basis of information about a position of a candidate of the edge application server included in the first list, and on the basis of information about a position of the wireless terminal device or information about a position of a base station device to which the wireless terminal device is connected.
[24] The core network device according to [18], further including:
   a storage unit configured to store a first list of a candidate of an edge application server managed by a PLMN operator, in which
   the processing execution unit executes:
      a process of creating a policy/rule for determining whether or not to use the edge computing, on the basis of information about a position of a candidate of the edge application server included in the first list, and on the basis of information about a position of a base station device to which the wireless terminal device is connected.
[25] The core network device according to [18], further including:
   a storage unit configured to store a first list of a candidate of an edge application server managed by a PLMN operator, in which
   the processing execution unit executes:
      a process of creating a policy/rule for determining whether or not to use the edge computing on the basis of a delay between a candidate of the edge application server included in the first list and a base station device to which the wireless terminal device is connected or a device that is connected with the base station device and processes a user plane function.
[26] The core network device according to [25], in which
   the processing execution unit executes:
   a process of setting, in the base station device, measurement of a delay between a candidate of the edge application server and the base station device to which the wireless terminal device is connected.
[27] The core network device according to [25], in which
   the processing execution unit executes:
   a process of setting, in a device that processes a user plane function, measurement of a delay between a candidate of the edge application server and the device that is connected with the base station device and processes the user plane function.
[28] The core network device according to [26] or [27], in which
   the processing execution unit executes:
   a process of setting a condition for sending a result of the measurement to the base station device or the device that processes the user plane function.
[29] The core network device according to [26] or [27], in which
   the processing execution unit executes:
   a process of updating a policy/rule for determining whether or not to use the edge computing, on the basis of a result of the measurement.
[30] The core network device according to any one of [23] to [29], in which
   the processing execution unit executes:
   a process of creating a policy/rule for determining a connectivity model to be applied to a set of the base station device and a candidate of the edge application server.
[31] (Claim 18) (Example 3) (Paragraph [0145]) The core network device according to any one of [23] to [30], in which
   the processing execution unit executes:
   a process of receiving the request including a second list of a candidate of an edge application server managed by a service provider other than the PLMN operator;
   a process of confirming subscription information between the PLMN operator and the service provider, the subscription information regarding use of a candidate of the edge application server included in the second list; and
   a process of creating a policy/rule for determining whether or not to use the edge computing on the basis of a candidate of the edge application server included in the second list in addition to a candidate of the edge application server included in the first list, in a case where the subscription information is information permitting use of a candidate of the edge application server included in the second list.
[32] The core network device according to [31], in which
   the processing execution unit executes:
   a process of creating a policy/rule for determining a connectivity model to be applied to a set of the base station device and a candidate of the edge application server on the basis of a candidate of the edge application server included in the second list in addition to a candidate of the edge application server included in the first list, in a case where the subscription information is information indicating permission on use of a candidate of the edge application server included in the second list.
[33] The core network device according to any one of [20] to [32], in which
   the processing execution unit executes:
   a process of creating the policy/rule on an area/site basis.
[34] The core network device according to any one of [23] to [33], in which
   the processing execution unit executes:
   a process of including the policy/rule in the information about edge computing.
[35] The core network device according to any one of [24] or [29] to [34], in which
   the processing execution unit executes:
   a process of acquiring information about a position of the wireless terminal device;
   a process of acquiring the policy/rule; and
   a process of determining whether or not to use the edge computing in accordance with the policy/rule.
[36] The core network device according to any one of [24] or [28] to [34], in which
   the processing execution unit executes:
   a process of acquiring information about a position of the base station device to which the wireless terminal device is connected;
   a process of acquiring the policy/rule; and
   a process of determining whether or not to use the edge computing in accordance with the policy/rule.
[37] The core network device according to (25) or [29] to [34], in which
   the processing execution unit executes:
   a process of determining the base station device to which the wireless terminal device is connected;
   a process of acquiring the policy/rule; and
   a process of determining whether or not to use the edge computing in accordance with the policy.
[38] The core network device of any one of [35] to [37], in which
   the characteristic for each QoS flow includes a first characteristic of a case where edge computing is used for the request and a second characteristic of a case where edge computing is not used for the request, and
   the processing execution unit executes:
      a process of assigning the first characteristic to the QoS flow in the one PDU session when it is determined to use the edge computing; and
      a process of assigning the second characteristic to the QoS flow in the one PDU session when it is determined not to use the edge computing.
[39] (Claim 19) (Fig. 8) (Paragraphs [0178] to [0181]) The core network device according to any one of [35] to [37], in which
   the processing execution unit executes:
   a process of selecting one edge application server from a candidate of the edge application server included in the first list, when it is determined to use the edge computing; and
   a process of establishing a connection between the one PDU session and the selected one edge application server.
[40] The core network device according to [39], in which
   the processing execution unit executes:
   a process of creating a second policy/rule for determining a connectivity model to be applied to a set of the base station device and a candidate of the edge application server; and
   a process of determining a connectivity model to be applied to a set of the base station device to which the wireless terminal device is connected and the selected one edge application server, in accordance with the second policy/rule.
[41] The core network device according to [40], in which
   in a case where the determined connectivity model is a distributed anchor point,
   the processing execution unit executes:
      a process of selecting a UPF that is to be a PDU session anchor (PSA) on the basis of information about a position of the selected one edge application server; and
      a process of establishing the one PDU session between the wireless terminal device and the UPF.
[42] The core network device according to [40], in which
   in a case where the determined connectivity model is session breakout,
   the processing execution unit executes:
      a process of selecting a first UPF that is to be a PSA, on the basis of information about a position of an application server installed at a central site;
      a process of selecting a second UPF supporting a function of a UL classifier or a branching point, on the basis of information about a position of selected one edge application server;
      a process of establishing the one PDU session between the wireless terminal device and the first UPF through the second UPF; and
      a process of setting a branch session between the selected one edge application server and the second UPF using the function of the UL classifier or the branching point, in addition to the one PDU session.
[43] The core network device according to [40], in which
   in a case where the determined connectivity model is multiple PDU sessions,
   the processing execution unit executes:
      a process of selecting a first UPF that is to be a PSA, on the basis of information about a position of an application server installed at a central site;
      a process of selecting a second UPF that is to be a PSA, on the basis of information about a position of selected one edge application server;
      a process of establishing a first PDU session that is the one PDU session between the wireless terminal device and the first UPF; and
      a process of establishing a second PDU session between the wireless terminal device and the second UPF.
[44] (Claim 29) (Paragraph [0262]) The core network device according to [15], in which
   the processing execution unit executes:
   a process of creating a policy/rule including an instruction for setting C-DRX or I-DRX in the wireless terminal device as an end destination of the one PDU session, at a time of establishing the one PDU session using edge computing.
[45] The core network device according to [44], in which
   the processing execution unit executes:
   a process of receiving the request including an instruction for setting C-DRX or I-DRX, to a wireless terminal device as an end destination of the one PDU session, at a time of establishing the one PDU session using the edge computing; and
   a process of creating the policy/rule in accordance with the received request.
[46] The core network device according to [43] or [45], in which
   the request further includes a value of at least one parameter, for the C-DRX or the I-DRX, among longDRX-Cycle, drxStartOffset, onDurationTimer, drx-InactivityTimer, drxShortCycleTimer, and shortDRX-Cycle, and
   the processing execution unit executes:
      a process of setting the C-DRX or the I-DRX having the value of the parameter in accordance with the policy/rule, for the wireless terminal device that is the end destination of the one PDU session at a time of establishing the one PDU session.

### <Core network communication processing method>

[47] (Claim 21) (Example 1, Example 2, Example 3) (Paragraph [0109]) A core network communication processing method including:
a step of receiving a request including a number of two or more QoS flows to be allocated to one PDU session, a characteristic of each QoS flow, and QoS monitoring setting of each QoS flow;
a step of establishing the one PDU session in response to a connection request from a wireless terminal device; and
a step of allocating two or more QoS flows to the one PDU session on the basis of the request, and setting the characteristic and the QoS monitoring to each QoS flow.

### <Wireless terminal device>

[48] A wireless terminal device including a processing execution unit, in which
the processing execution unit executes:
a process of activating an application;
a process of requesting connection to a device that processes data for the application; and
a process of setting C-DRX or I-DRX in a case where a PDU session established according to the request is connected to the device that operates as an edge application server.

### REFERENCE SIGNS LIST

- 20: UE (wireless terminal device)
- 30: RAN/AN (base station device)
- 40: 5GC (core network device)
- 50: Application server (server device)
- 100: Image
- 101: Region
- 102: Region
- 103: Region
- 104: Region
- 105: Region
- 106: Region
- 107: Region
- 108: Region
- 109: Region
- 401: AMF
- 402: NEF
- 403: NRF
- 404: NSSF
- 405: PCF
- 406: SMF
- 407: UDM
- 408: AF
- 409: AUSF
- 410: UCMF
- 430: UPF
- 440: DN

## Claims

1. A server device comprising a processing execution unit, wherein
the processing execution unit executes:
a process of determining two or more pieces of data to be allocated to one protocol data unit (PDU) session;
a process of determining a number of two or more quality of service (QoS) flows to be allocated to the one PDU session, a characteristic of each QoS flow, and monitoring setting of each QoS flow;
a process of generating a request including the number of QoS flows, the characteristic of each QoS flow, and the QoS monitoring setting of each QoS flow;
a process of sending the request;
a process of mapping the two or more pieces of data individually to the two or more QoS flows to be allocated to the one PDU session;
a process of receiving a QoS monitoring result of the two or more QoS flows; and
a process of modifying a format of at least one piece of data among the two or more pieces of data in a case where the received QoS monitoring result does not satisfy a desired condition.

2. The server device according to claim 1, wherein
in a case where the acquired QoS monitoring result does not satisfy a desired condition,
the processing execution unit executes:
a process of modifying a format of data to be mapped to a QoS flow that does not satisfy the desired condition.

3. The server device according to claim 1, wherein
in a case where the acquired QoS monitoring result does not satisfy a desired condition,
the processing execution unit executes:
a process of requesting modification in a characteristic of a QoS flow that does not satisfy the desired condition, and
a process of modifying a format of data to be mapped to the QoS flow subjected to modification.

4. The server device according to claim 1, wherein
in a case where the acquired QoS monitoring result does not satisfy a desired condition,
the processing execution unit executes:
a process of requesting addition of a QoS flow to be allocated to the one PDU session;
a process of dividing at least one piece of data among the two or more pieces of data into a plurality of pieces;
a process of modifying a format of at least one piece of data among divided pieces of the data; and
a process of mapping the at least one piece of data subjected to modification to the added QoS flow.

5. The server device according to claim 1, wherein
the processing execution unit executes:
a process of acquiring information regarding edge computing;
a process of determining whether or not use of edge computing is desired at a time of establishing the one PDU session, on a basis of the information regarding edge computing; and
a process of generating the request including information indicating whether or not use of the edge computing is desired.

6. The server device according to claim 5, wherein
the information regarding edge computing includes information about an available connectivity model, and
the processing execution unit executes:
a process of selecting one or more connectivity models from the available connectivity model; and
a process of generating the request including information about the one or more connectivity models that have been selected.

7. The server device according to claim 5, wherein
the processing execution unit executes:
a process of creating a list of a candidate of an edge application server managed by a service provider other than a PLMN operator; and
a process of generating the request including the list.

8. The server device according to claim 1, wherein
the processing execution unit executes:
a process of generating the request including the number of the QoS flows, the characteristic of each QoS flow, and the QoS monitoring setting of each QoS flow, in which the number of the QoS flows, the characteristic of each QoS flow, and the QoS monitoring setting of each QoS flow each vary between a case where edge computing is available and a case where the edge computing is unavailable.

9. The server device according to claim 1, wherein
the processing execution unit executes:
a process of generating the request including information instructing to set connected mode discontinuous reception (C-DRX) or inactive mode discontinuous reception (I-DRX), to a wireless terminal device as an end destination of the one PDU session, at a time of establishing the one PDU session using edge computing.

10. The server device according to claim 9, wherein
the processing execution unit executes:
a process of generating the request including a value of at least one parameter, for the C-DRX or the I-DRX, among longDRX-Cycle, drxStartOffset, onDurationTimer, drx-InactivityTimer, drxShortCycleTimer, and shortDRX-Cycle (Fig. 5: S505).

11. An application execution method comprising:
a step of determining two or more pieces of data to be allocated to one PDU session;
a step of determining a number of two or more QoS flows to be allocated to the one PDU session, a characteristic of each QoS flow, and QoS monitoring setting of each QoS flow;
a step of generating a request including the number of QoS flows, the characteristic of each QoS flow, and the QoS monitoring setting of each QoS flow;
a step of sending the request;
a step of mapping the two or more pieces of data individually to the two or more QoS flows to be allocated to the one PDU session;
a step of receiving a QoS monitoring result of the two or more QoS flows; and
a step of modifying a format of at least one piece of data among the two or more pieces of data in a case where the received QoS monitoring result does not satisfy a desired condition.

12. A core network device comprising a processing execution unit, wherein
the processing execution unit executes:
a process of receiving a request including a number of two or more QoS flows to be allocated to one PDU session, a characteristic of each QoS flow, and QoS monitoring setting of each QoS flow;
a process of establishing the one PDU session in response to a connection request from a wireless terminal device; and
a process of allocating two or more QoS flows to the one PDU session on a basis of the request, and setting the characteristic and the QoS monitoring to each QoS flow.

13. The core network device of claim 12, wherein
the processing execution unit executes:
a process of determining that the connection request from the wireless terminal device is intended for use of edge computing in a case where the request includes an instruction for using a QoS flow to which a specific characteristic is allocated, and creating a policy/rule for using the edge computing.

14. The core network device according to claim 12, wherein a policy/rule related to QoS monitoring of a QoS flow to which data to be processed by an edge application server is mapped among the two or more QoS flows includes an instruction for a user plane function (UPF) that processes the QoS flow to directly send a monitoring result of the QoS flow to the edge application server.

15. The core network device according to claim 12, wherein
the processing execution unit executes:
a process of disclosing information regarding edge computing, through any network function of a core network.

16. The core network device according to claim 15, further comprising:
a storage unit configured to store a first list of a candidate of an edge application server managed by a PLMN operator, wherein
the information regarding edge computing includes the first list.

17. The core network device according to claim 15, further comprising:
a storage unit configured to store a first list of a candidate of an edge application server managed by a PLMN operator, wherein
the processing execution unit executes:
a process of creating a policy/rule for determining whether or not to use the edge computing, on a basis of information about a position of a candidate of the edge application server included in the first list, and on a basis of information about a position of the wireless terminal device or information about a position of a base station device to which the wireless terminal device is connected.

18. The core network device of claim 17, wherein
the processing execution unit executes:
a process of receiving the request including a second list of a candidate of an edge application server managed by a service provider other than the PLMN operator;
a process of confirming subscription information between the PLMN operator and the service provider, the subscription information regarding use of a candidate of the edge application server included in the second list; and
a process of creating a policy/rule for determining whether or not to use the edge computing on a basis of a candidate of the edge application server included in the second list in addition to a candidate of the edge application server included in the first list, in a case where the subscription information is information permitting use of a candidate of the edge application server included in the second list.

19. The core network device of claim 17, wherein
the processing execution unit executes:
a process of selecting one edge application server from a candidate of the edge application server included in the first list, when it is determined to use the edge computing; and
a process of establishing a connection between the one PDU session and the selected one edge application server.

20. The core network device according to claim 12, wherein
the processing execution unit executes:
a process of creating a policy/rule including an instruction for setting C-DRX or I-DRX in the wireless terminal device as an end destination of the one PDU session, at a time of establishing the one PDU session using edge computing.

21. A core network communication processing method comprising:
a step of receiving a request including a number of two or more QoS flows to be allocated to one PDU session, a characteristic of each QoS flow, and QoS monitoring setting of each QoS flow;
a step of establishing the one PDU session in response to a connection request from a wireless terminal device; and
a step of allocating two or more QoS flows to the one PDU session on a basis of the request, and setting the characteristic and the QoS monitoring to each QoS flow.
